(19) Europäisches Patentamt / European Patent Office / Office européen des brevets

(11) **EP 4 316 732 A1**

(12) **EUROPEAN PATENT APPLICATION**
published in accordance with Art. 153(4) EPC

(43) Date of publication:
**07.02.2024 Bulletin 2024/06**

(21) Application number: **22780430.9**

(22) Date of filing: **23.03.2022**

(51) International Patent Classification (IPC):
**B24B 7/13** (2006.01)    **B24B 21/12** (2006.01)
**B29B 17/02** (2006.01)    **C09J 7/38** (2018.01)

(52) Cooperative Patent Classification (CPC):
**B24B 7/13; B24B 21/12; B29B 17/02; C09J 7/38;**
Y02W 30/62

(86) International application number:
**PCT/JP2022/013731**

(87) International publication number:
**WO 2022/210216 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021056378**

(71) Applicant: **Nitto Denko Corporation**
**Ibaraki-shi, Osaka 567-8680 (JP)**

(72) Inventors:
• **YAMADA, Yosuke**
**Ibaraki-shi, Osaka 567-8680 (JP)**
• **YAMAMOTO, Akiyoshi**
**Ibaraki-shi, Osaka 567-8680 (JP)**
• **NOMURA, Takayuki**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **ADHESIVE TAPE PROCESSING METHOD AND ADHESIVE TAPE PROCESSING DEVICE**

(57)    Provided is a pressure-sensitive adhesive tape processing method capable of easily separating a base material and a pressure-sensitive adhesive for forming a pressure-sensitive adhesive tape from each other at low cost. Furthermore, a pressure-sensitive adhesive tape processing device used for such a pressure-sensitive adhesive tape processing method is provided. The pressure-sensitive adhesive tape processing method according to an embodiment of the present invention is a method for processing a pressure-sensitive adhesive tape including a base material layer and a pressure-sensitive adhesive layer, a storage modulus of the base material layer at 25°C is 2 MPa or more, and the pressure-sensitive adhesive tape processing method includes a step (I) of separating a pressure-sensitive adhesive for forming the pressure-sensitive adhesive layer, from the base material layer, by grinding a surface of the pressure-sensitive adhesive layer of the pressure-sensitive adhesive tape.

FIG.3

EP 4 316 732 A1

**Description**

TECHNICAL FIELD

The present invention relates to a pressure-sensitive adhesive tape processing method and a pressure-sensitive adhesive tape processing device.

BACKGROUND ART

Pressure-sensitive adhesive tapes have been used in a large amount in, for example, bonding of labels or the like to articles or wrapping materials, packaging of packaging materials, production processes for electronic members or optical members, and masking application. In particular, in recent years, the frequency at which the pressure-sensitive adhesive tapes are used in the production processes for the electronic members or the optical members has been increasing and hence a large amount of pressure-sensitive adhesive tape waste has been produced in, for example, production sites.

Typically, the pressure-sensitive adhesive tape waste is subjected to waste treatment by being burnt, or is subjected to waste treatment by being brought into a waste disposal site. However, such waste treatment is not preferred from the viewpoint of reduction in environmental load.

In view of the foregoing, such waste treatment for the pressure-sensitive adhesive tape waste as described above needs to be minimized. There has been desired an investigation on the recycling of pressure-sensitive adhesive tape materials as means for reducing such pressure-sensitive adhesive tape waste treatment.

With regard to an acrylic pressure-sensitive adhesive to be incorporated into the pressure-sensitive adhesive tape, there is a report of a method including designing the composition of the acrylic pressure-sensitive adhesive to specific composition to separate the pressure-sensitive adhesive.

There is a report of a technology including re-macerating the pressure-sensitive adhesive layer of a pressure-sensitive adhesive tape in a process for the turning of the tape into regenerated pulp to make the tape recyclable (Patent Literature 1). In the technology, the composition of a pressure-sensitive adhesive for forming the pressure-sensitive adhesive layer is formed of an alkoxyalkyl (meth)acrylate (from 7 wt% to 30 wt%), a caprolactone adduct of (meth)acrylic acid (from 1 wt% to 15 wt%), a (meth)acrylic acid alkyl ester monomer having an alkyl group having 4 to 18 carbon atoms (from 20 wt% to 70 wt%), an ethylenically unsaturated carboxylic acid-containing monomer (from 7 wt% to 20 wt%), and a monomer copolymerizable with these components (from 1 wt% to 15 wt%), and the pressure-sensitive adhesive having the specific composition is prepared to enable the maceration of the layer in an aqueous solution of NaOH having a concentration of 18%.

There is a report of a technology including subjecting an adhesive for labeling to be suitably peeled at the time of the recycling of a plastic bottle to saponification treatment with an alkaline aqueous solution to detach the adhesive (Patent Literature 2). In the technology, a potentially swelling component (a random, block, or graft copolymer containing 35 wt% to 90 wt% of a lower alkyl ester of acrylic acid and/or maleic acid) is incorporated into the adhesive to enable the detachment of the adhesive through the saponification treatment with the alkaline aqueous solution or a solution obtained by adding methanol or ethanol to the solution.

There is a report of a technology including immersing a heat-sensitive pressure-sensitive adhesive label to be suitably peeled at the time of the recycling of a plastic bottle in a hot aqueous solvent at 60°C or more to cause the pressure-sensitive adhesive of the label to self-peel (Patent Literature 3). In the technology, a heat-sensitive pressure-sensitive adhesive composition containing an acrylic acid ester copolymerized product as a polymer material, a heat-expanding agent, polyvinyl alcohol having a saponification degree of 95 mol% or more, and a cross-linking agent or a curing agent are incorporated into the pressure-sensitive adhesive to cause the pressure-sensitive adhesive to self-peel.

However, in the conventional technology for recycling pressure-sensitive adhesive tape materials, in a case where a separation liquid is used for separating the pressure-sensitive adhesive, a large amount of the separation liquid is required. Therefore, additional process steps, such as recovering, recycling, and waste liquid treatment for the separation liquid, are required for recycling the pressure-sensitive adhesive tape materials, so that recycling cost becomes large.

As a matter of course, the technology for recycling pressure-sensitive adhesive tape materials is also required to be capable of easily separating a base material and a pressure-sensitive adhesive for forming the pressure-sensitive adhesive tape from each other.

CITATION LIST

Patent Literature

| Patent Literature 1: | JP 11-241053 A |
| Patent Literature 2: | JP 11-323280 A |
| Patent Literature 3: | JP 07-113067 A |

SUMMARY OF INVENTION

Technical Problem

An object of the present invention is to provide a pressure-sensitive adhesive tape processing method capable of easily separating a base material and a pressure-sensitive adhesive for forming a pressure-sensitive adhesive tape from each other at low cost. Another object of the present invention is to provide a pressure-sensitive adhesive tape processing device used for such a pressure-sensitive adhesive tape processing method.

Solution to Problem

A pressure-sensitive adhesive tape processing method according to an embodiment of the present invention is directed to a pressure-sensitive adhesive tape processing method for processing a pressure-sensitive adhesive tape including a base material layer and a pressure-sensitive adhesive layer, in which

a storage modulus of the base material layer at 25°C is 2 MPa or more, and
the pressure-sensitive adhesive tape processing method includes a step (I) of separating a pressure-sensitive adhesive for forming the pressure-sensitive adhesive layer, from the base material layer, by grinding a surface of the pressure-sensitive adhesive layer of the pressure-sensitive adhesive tape.

According to one embodiment, a tension of the pressure-sensitive adhesive tape is from 0.1 N to 1,000 N in the step (I).
According to one embodiment, the pressure-sensitive adhesive tape processing method according to the embodiment of the present invention includes a step (II) of removing the pressure-sensitive adhesive separated by the grinding.
According to one embodiment, the step (II) is at least one selected from a removal step in which air blowing is used, a removal step in which water is sprayed, and a removal step in which a brush is used.
According to one embodiment, the pressure-sensitive adhesive tape processing method according to the embodiment of the present invention includes a plurality of the steps (I).
According to one embodiment, in the pressure-sensitive adhesive tape processing method according to the embodiment of the present invention, the pressure-sensitive adhesive tape is a double-sided pressure-sensitive adhesive tape having the pressure-sensitive adhesive layer on each of both surfaces of the base material layer, and a surface of the pressure-sensitive adhesive layer on each of both the surfaces of the base material layer is ground by the grinding in the step (I).
According to one embodiment, a thickness of the pressure-sensitive adhesive tape is from 10 $\mu$m to 600 $\mu$m.
According to one embodiment, a thickness of the pressure-sensitive adhesive layer is from 3 $\mu$m to 300 $\mu$m.
According to one embodiment, the pressure-sensitive adhesive layer is formed of at least one kind selected from the group consisting of an acrylic pressure-sensitive adhesive, a urethane-based pressure-sensitive adhesive, a rubber-based pressure-sensitive adhesive, and a silicone-based pressure-sensitive adhesive.
A pressure-sensitive adhesive tape processing device according to an embodiment of the present invention includes: feeding means for feeding a pressure-sensitive adhesive tape including a base material layer and a pressure-sensitive adhesive layer; transporting means for transporting the pressure-sensitive adhesive tape; grinding means for grinding the pressure-sensitive adhesive layer of the pressure-sensitive adhesive tape; and recovering means for recovering the base material layer that remains after a pressure-sensitive adhesive for forming the pressure-sensitive adhesive layer is separated.
According to one embodiment, the grinding means is an electric tool including a file.
According to one embodiment, a tension of the pressure-sensitive adhesive tape is from 0.1 N to 1,000 N when the pressure-sensitive adhesive layer is ground by the grinding means.

According to one embodiment, removal means for removing the separated pressure-sensitive adhesive for forming the pressure-sensitive adhesive layer is included.

According to one embodiment, the removal means is at least one kind selected from removal in which air blowing is used, removal in which water is sprayed, and removal in which a brush is used.

According to one embodiment, the pressure-sensitive adhesive tape processing device according to the embodiment of the present invention includes a plurality of the grinding means.

According to one embodiment, in the pressure-sensitive adhesive tape processing device according to the embodiment of the present invention, the pressure-sensitive adhesive tape is a double-sided pressure-sensitive adhesive tape having the pressure-sensitive adhesive layer on each of both surfaces of the base material layer, and a surface of the pressure-sensitive adhesive layer on each of both the surfaces of the base material layer is ground by the grinding performed by the grinding means.

Advantageous Effects of Invention

The present invention can provide a pressure-sensitive adhesive tape processing method capable of easily separating a base material and a pressure-sensitive adhesive for forming a pressure-sensitive adhesive tape from each other at low cost.

Furthermore, the present invention can provide a pressure-sensitive adhesive tape processing device used for such a pressure-sensitive adhesive tape processing method.

BRIEF DESCRIPTION OF THE DRAWINGS

FIG. 1 is a schematic cross-sectional view of a pressure-sensitive adhesive tape of one embodiment to which a pressure-sensitive adhesive tape processing method according to an embodiment of the present invention is applicable.

FIG. 2 is a schematic cross-sectional view of a pressure-sensitive adhesive tape of another embodiment to which the pressure-sensitive adhesive tape processing method according to the embodiment of the present invention is applicable.

FIG. 3 is one process image diagram illustrating the pressure-sensitive adhesive tape processing method according to the embodiment of the present invention.

FIG. 4 is another process image diagram illustrating the pressure-sensitive adhesive tape processing method according to the embodiment of the present invention.

FIG. 5 is still another process image diagram illustrating the pressure-sensitive adhesive tape processing method according to the embodiment of the present invention.

DESCRIPTION OF EMBODIMENTS

When the expression "weight" is used herein, the expression may be replaced with "mass" that has been commonly used as an SI unit for representing a weight.

When the expression "(meth)acrylic" is used herein, the expression means "acrylic and/or methacrylic", when the expression "(meth)acrylate" is used herein, the expression means "acrylate and/or methacrylate", when the expression "(meth)allyl" is used herein, the expression means "allyl and/or methallyl", and when the expression "(meth)acrolein" is used herein, the expression means "acrolein and/or methacrolein".

<<Pressure-sensitive adhesive tape processing method>>

A pressure-sensitive adhesive tape processing method according to an embodiment of the present invention is a method for processing a pressure-sensitive adhesive tape including a base material layer and a pressure-sensitive adhesive layer. In the method, a storage modulus of the base material layer at 25°C is 2 MPa or more, and the pressure-sensitive adhesive tape processing method includes a step (I) of separating a pressure-sensitive adhesive for forming the pressure-sensitive adhesive layer, from the base material layer, by grinding a surface of the pressure-sensitive adhesive layer of the pressure-sensitive adhesive tape. Such a pressure-sensitive adhesive tape processing method allows the base material and the pressure-sensitive adhesive for forming the pressure-sensitive adhesive tape to be easily separated from each other at low cost.

In the description herein, the "grinding" means abrasive grinding.

The pressure-sensitive adhesive tape processing method according to one embodiment of the present invention may include any appropriate other step to the extent that the effects of the present invention are not impaired.

The pressure-sensitive adhesive tape processing method according to one embodiment of the present invention includes a step (II) of removing, by air blowing, a pressure-sensitive adhesive having been separated by grinding in the step (I).

A pressure-sensitive adhesive tape to be processed by the pressure-sensitive adhesive tape processing method according to an embodiment of the present invention is a pressure-sensitive adhesive tape that includes a base material layer and a pressure-sensitive adhesive layer. The pressure-sensitive adhesive tape to be processed may include any appropriate other layer to the extent that the effects of the present invention are not impaired as long as the pressure-sensitive adhesive tape to be processed is a pressure-sensitive adhesive tape that includes the base material layer and the pressure-sensitive adhesive layer. The number of such other layers may be one, or two or more.

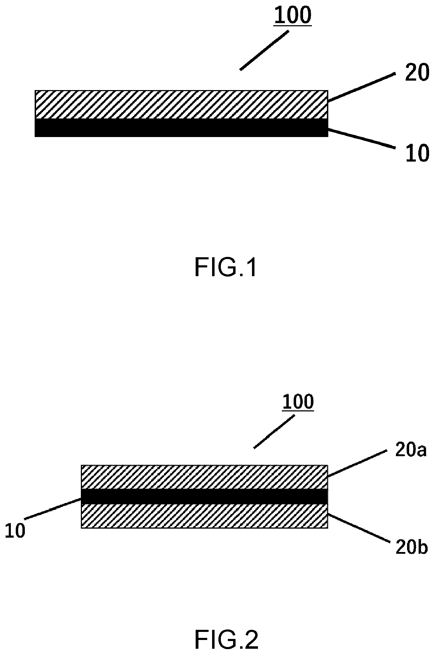

As shown in FIG. 1, according to one embodiment of the pressure-sensitive adhesive tape to be processed, a pressure-sensitive adhesive tape 100 is formed of a base material layer 10 and a pressure-sensitive adhesive layer 20.

A pressure-sensitive adhesive tape to be processed according to one embodiment is in a form of a double-side pressure-sensitive adhesive tape in which the pressure-sensitive adhesive tape 100 has a pressure-sensitive adhesive layer 20a and a pressure-sensitive adhesive layer 20b on both respective surfaces of the base material layer 10, as shown in FIG. 2.

The step (I) is a step of separating the pressure-sensitive adhesive for forming the pressure-sensitive adhesive layer, from the base material layer, by grinding a surface of the pressure-sensitive adhesive layer of the pressure-sensitive adhesive tape.

Any appropriate grinding method may be adopted as a method for grinding a surface of the pressure-sensitive adhesive layer of the pressure-sensitive adhesive tape to the extent that the effects of the present invention are not impaired. Examples of such a grinding method include a method in which a belt sander having an abrasive belt is used, and a method in which grinding is performed by an electric tool (hand grinder, precision grinder, electric cutting tool, or the like) having a file (paper, cloth, metal). Such a grinding method is, for example, a method in which a belt sander having an abrasive belt is used because the effects of the present invention can be further expressed. That is, an abrasive belt of a belt sander having the abrasive belt is brought into contact with a surface of the pressure-sensitive adhesive layer of the pressure-sensitive adhesive tape. In this case, an embodiment in which the pressure-sensitive adhesive layer of the pressure-sensitive adhesive tape is pressed against the abrasive belt may be implemented, an embodiment in which the abrasive belt is pressed against the pressure-sensitive adhesive layer of the pressure-sensitive adhesive tape may be implemented, or another embodiment in which the abrasive belt and the surface of the pressure-sensitive adhesive layer of the pressure-sensitive adhesive tape are brought into contact with each other may be implemented.

Any appropriate belt sander may be adopted as the belt sander to the extent that the effects of the present invention are not impaired.

Any appropriate belt speed may be adopted as a belt speed of the belt sander to the extent that the effects of the present invention are not impaired. Such a belt speed is preferably from 0.1 m/second to 100 m/second, more preferably from 0.2 m/second to 70 m/second, still more preferably from 0.5 m/second to 50 m/second, and particularly preferably from 1 m/second to 30 m/second because the effects of the present invention can be further expressed.

Any appropriate abrasive belt may be adopted as the abrasive belt to the extent that the effects of the present invention are not impaired.

Any appropriate grain size may be adopted as a grain size of the abrasive belt to the extent that the effects of the present invention are not impaired. Such a grain size is preferably from #20 to #2,000, more preferably from #24 to #1,200, still more preferably from #30 to #1,000, still more preferably from #40 to #800, still more preferably from #50 to #800, particularly preferably from #60 to #800, and most preferably from #80 to #800 because the effects of the present invention can be further expressed. If the grain size number is excessively small outside the above described range, damage to the base material layer is large, and a recovery rate of the base material layer may be reduced or the base material layer may be broken, and therefore, the tension of the pressure-sensitive adhesive tape needs to be lowered when the surface of the pressure-sensitive adhesive layer is ground. If the grain size number is excessively large outside the above-described range, a time for performing necessary grinding may become excessively long.

Any appropriate belt width may be adopted as a belt width of the abrasive belt to the extent that the effects of the present invention are not impaired.

The tension of the pressure-sensitive adhesive tape is preferably from 0.1 N to 1,000 N, more preferably from 1 N to 900 N, still more preferably from 3 N to 800 N, still more preferably from 5 N to 700 N, still more preferably from 5 N to 600 N, still more preferably from 5 N to 500 N, still more preferably from 5 N to 400 N, still more preferably from 5 N to 300 N, particularly preferably from 5 N to 200 N, and most preferably from 5 N to 100 N when the surface of the pressure-sensitive adhesive layer is ground because the effects of the present invention can be further expressed. If the tension of the pressure-sensitive adhesive tape is excessively low outside the above-described range when the surface of the pressure-sensitive adhesive layer is ground, the abrasive belt and the pressure-sensitive adhesive layer are not brought into appropriate contact with each other, and the surface is unevenly ground, so that the surface may not be effectively ground. If the tension of the pressure-sensitive adhesive tape is excessively high outside the above-described range when the surface of the pressure-sensitive adhesive layer is ground, damage to the base material layer is large, and a recovery rate of the base material layer may be reduced or the base material layer may be broken. Tension control means for adjusting the tension within the above-described range is not particularly limited, and may be selected as appropriate from known tension control means, such as means for controlling a force for pressing the abrasive belt against the pressure-sensitive adhesive tape, and means for changing and controlling a speed ratio between rollers.

The pressure-sensitive adhesive tape processing method according to the embodiment of the present invention preferably includes the step (II) of removing a pressure-sensitive adhesive separated by the grinding in the step (I). By removing the pressure-sensitive adhesive separated by the grinding in the step (I), the pressure-sensitive adhesive separated by the grinding in the step (I) can be inhibited from being adhered again to the pressure-sensitive adhesive tape or inhibited from being adhered again to an abrasive belt or the like in a case where a belt sander is used.

In the step (II), any appropriate method may be adopted to the extent that the effects of the present invention are not impaired as long as the method allows the pressure-sensitive adhesive separated by the grinding in the step (I) to be removed. Examples of such a method include a method in which the separated pressure-sensitive adhesive is blown by blowing of gas, a wet removal method in which the pressure-sensitive adhesive is removed by, for example, spraying liquid, and a mechanical removal method in which friction by a brush is used. Specifically, for example, the method is at least one kind selected from a removal process in which air blowing is used, a removal process in which water is sprayed, and a removal process in which a brush is used.

The pressure-sensitive adhesive tape processing method according to the embodiment of the present invention may include a step (III) of recovering the pressure-sensitive adhesive separated by the grinding in the step (I) or removal matter generated by removing the pressure-sensitive adhesive. Any appropriate method may be adopted as such a recovery method to the extent that the effects of the present invention are not impaired. Examples of such a recovery method include a method by a dust collector in which static electricity is used, and a method by a dust collector in which a suction force is used.

In the pressure-sensitive adhesive tape processing method according to the embodiment of the present invention, through IR measurement (infrared spectroscopy), whether or not the pressure-sensitive adhesive for forming the pressure-sensitive adhesive layer has been separated from the pressure-sensitive adhesive tape can be confirmed, and the degree of the separation can be further confirmed. Since the pressure-sensitive adhesive has a component based on its kind, whether or not an IR spectrum specific to the component is found can be confirmed. Furthermore, through quantitative calculation based on an intensity of the IR spectrum, whether or not the pressure-sensitive adhesive for forming the pressure-sensitive adhesive layer has been separated from the pressure-sensitive adhesive tape can be confirmed, and the degree of the separation can be further confirmed.

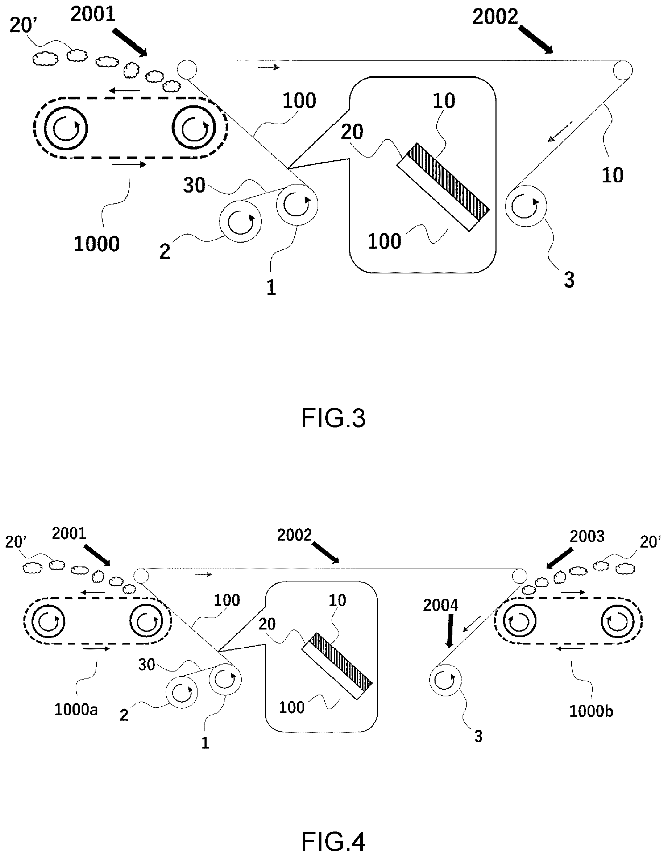

FIG. 3 is one preferable process image diagram illustrating the pressure-sensitive adhesive tape processing method according to the embodiment of the present invention. In the embodiment shown in FIG. 3, the pressure-sensitive adhesive tape 100 in which a separator 30 is provided on a surface of the pressure-sensitive adhesive layer 20 is fed from a roll body 1 while the separator 30 is wound by a separator winding roll 2 (feeding means). The fed pressure-sensitive adhesive tape 100 is transported (transporting means), the pressure-sensitive adhesive layer 20 is conveyed so as to be pressed against an abrasive belt of a belt sander 1000 having the abrasive belt, and the pressure-sensitive adhesive layer 20 is ground by the abrasive belt (step (I)) (grinding means). Thus, by grinding the pressure-sensitive adhesive layer 20 by the abrasive belt, a pressure-sensitive adhesive 20' for forming the pressure-sensitive adhesive layer 20 is separated from the base material layer 10. The separated pressure-sensitive adhesive 20' is likely to be adhered again to the pressure-sensitive adhesive tape 100, the base material layer 10, the abrasive belt, or the like, and is thus removed by removal means (2001, 2002 in the embodiment in FIG. 3) as required as shown in FIG. 3. Thereafter, the remaining base material layer 10 is wound by a roll 3 and recovered (recovering means). The removal means is, for example, at least one kind selected from removal means in which air blowing is used, removal means in which water is sprayed, and removal means in which a brush is used.

FIG. 4 is another preferable process image diagram illustrating the pressure-sensitive adhesive tape processing method according to the embodiment of the present invention. The embodiment shown in FIG. 4 is an embodiment in which the pressure-sensitive adhesive tape processing method according to the embodiment of the present invention includes a plurality of the steps (I). In the embodiment shown in FIG. 4, the pressure-sensitive adhesive tape 100 in which the separator 30 is provided on a surface of the pressure-sensitive adhesive layer 20 is fed from the roll body 1 while the separator 30 is wound by the separator winding roll 2 (feeding means). The fed pressure-sensitive adhesive tape 100 is transported (transporting means), the pressure-sensitive adhesive layer 20 is conveyed so as to be pressed against an abrasive belt of a belt sander 1000a having the abrasive belt, and the pressure-sensitive adhesive layer 20 is ground by the abrasive belt (step (Ia)) (grinding means a). Thus, by grinding the pressure-sensitive adhesive layer 20 by the abrasive belt, the pressure-sensitive adhesive 20' for forming the pressure-sensitive adhesive layer 20 is separated from the base material layer 10. The separated pressure-sensitive adhesive 20' is likely to be adhered again to the pressure-sensitive adhesive tape 100, the base material layer 10, the abrasive belt, or the like, and is thus removed by air blowing (2001, 2002 in the embodiment in FIG. 4) as required as shown in FIG. 4. Thereafter, in order to separate the pressure-sensitive adhesive layer 20 that cannot be fully separated in the step (Ia) and remains on the base material layer 10, the base material layer 10 (on which the pressure-sensitive adhesive layer 20 remains) is further transported (transporting means), the pressure-sensitive adhesive layer 20 is conveyed so as to be pressed against an abrasive belt of a belt sander 1000b having the abrasive belt, and the remaining pressure-sensitive adhesive layer 20 is ground by the abrasive belt (step (Ib)) (grinding means b). Thus, by grinding the remaining pressure-sensitive adhesive layer 20 by the abrasive belt, the pressure-sensitive adhesive 20' for forming the remaining pressure-sensitive adhesive layer 20 is separated from the base material layer 10. The separated pressure-sensitive adhesive 20' is likely to be adhered again to the pressure-sensitive adhesive tape 100, the base material layer 10, the abrasive belt, or the like, and is thus removed by removal means (2003, 2004 in the embodiment in FIG. 4) as required as shown in FIG. 4. Thereafter, the remaining base material layer 10 is wound by the roll 3 and recovered (recovering means). The removal means is, for example, at least one kind selected from removal means in which air blowing is used, removal means in which water is sprayed, and removal means in which a brush is used.

In the embodiment in which the plurality of the steps (I) are included as shown in FIG. 4, the grain sizes of the abrasive belts used in the plurality of the steps (I) preferably have sequentially increased numbers (grain size number is increased; grains are made finer) along the flow of the process. In the example shown in FIG. 4, the grain size number of the abrasive belt of the belt sander 1000b is preferably greater than the grain size number of the abrasive belt of the belt sander 1000a (for example, the grain size of the abrasive belt of the belt sander 1000a is #100, the grain size of the abrasive belt of the belt sander 1000b is #600). In such a design, the pressure-sensitive adhesive layer can be ground immediately before the base material layer is reached at an initial stage of the process, and, in the succeeding stage, the pressure-sensitive adhesive layer remaining on the base material layer can be ground as precisely as possible to perform finishing treatment.

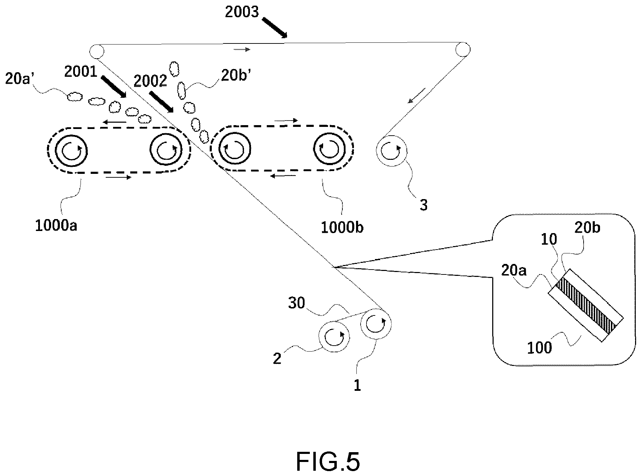

FIG. 5 is still another preferable process image diagram illustrating the pressure-sensitive adhesive tape processing method according to the embodiment of the present invention. According to the embodiment shown in FIG. 5, in the pressure-sensitive adhesive tape processing method according to the embodiment of the present invention, the pressure-sensitive adhesive tape is a double-sided pressure-sensitive adhesive tape having the pressure-sensitive adhesive layers on both the surfaces of the base material layer, and the surfaces of the pressure-sensitive adhesive layers on both the surfaces of the base material layer are ground by grinding in the step (I). In the embodiment shown in FIG. 5, a double-sided pressure-sensitive adhesive tape 100 which is formed as the roll body 1 so as to have the pressure-sensitive adhesive layer 20a and the pressure-sensitive adhesive layer 20b on both the respective surfaces of the base material layer 10, and have the separator 30 on the surface of the pressure-sensitive adhesive layer 20a is fed from the roll body 1 while the separator 30 is wound by the separator winding roll 2 (feeding means). The fed pressure-sensitive adhesive tape 100 is transported (transporting means), and is conveyed so as to press the pressure-sensitive adhesive layer 20a against an abrasive belt of a belt sander 1000a having the abrasive belt and press the pressure-sensitive adhesive layer 20b against an abrasive belt of a belt sander 1000b having the abrasive belt, so that the pressure-sensitive adhesive layer 20a and the pressure-sensitive adhesive layer 20b are ground by the abrasive belts (step (I)) (grinding means). Thus, by grinding the pressure-sensitive adhesive layer 20a and the pressure-sensitive adhesive layer 20b by the abrasive belts, a pressure-sensitive adhesive 20a' for forming the pressure-sensitive adhesive layer 20a and a pressure-sensitive adhesive 20b' for forming the pressure-sensitive adhesive layer 20b are separated from the base material layer 10. The separated pressure-sensitive adhesive 20a' and pressure-sensitive adhesive 20b' are likely to be adhered again to the pressure-sensitive adhesive tape 100, the base material layer 10, the abrasive belts, or the like, and are thus removed by removal means (2001, 2002, 2003 in the embodiment shown in FIG. 5) as required as shown in FIG. 5. Thereafter, the remaining base material layer 10 is wound by the roll 3 and recovered (recovering means). The removal means is, for example, at least one kind selected from removal means in which air blowing is used, removal means in which water is sprayed, and removal means in which a brush is used.

The pressure-sensitive adhesive tape processing method according to the embodiment of the present invention may be implemented as a combination of the embodiment in which a plurality of the steps (I) are included as shown in FIG. 4, and the embodiment in which the pressure-sensitive adhesive tape is a double-sided pressure-sensitive adhesive tape having the pressure-sensitive adhesive layers on both the surfaces of the base material layer, and the surfaces of the pressure-sensitive adhesive layers on both the surfaces of the base material layer are ground by grinding in the step (I) as shown in FIG. 5.

<<Pressure-sensitive adhesive tape processing device>>

A pressure-sensitive adhesive tape processing device according to an embodiment of the present invention is a processing device used for the pressure-sensitive adhesive tape processing method according to the embodiment of the present invention. Similarly to the embodiment described with reference to FIG. 3, the pressure-sensitive adhesive tape processing device includes feeding means for feeding the pressure-sensitive adhesive tape including the base material layer and the pressure-sensitive adhesive layer, transporting means for transporting the pressure-sensitive adhesive tape, grinding means for grinding the pressure-sensitive adhesive layer of the pressure-sensitive adhesive tape, and recovering means for recovering the base material layer that remains after the pressure-sensitive adhesive for forming the pressure-sensitive adhesive layer has been separated. Furthermore, similarly to the embodiment described with reference to FIG. 4, the pressure-sensitive adhesive tape processing device according to the embodiment of the present invention may include a plurality of the grinding means. Moreover, similarly to the embodiment described with reference to FIG. 5, the pressure-sensitive adhesive tape processing device according to the embodiment of the present invention may be implemented as an embodiment in which the pressure-sensitive adhesive tape is a double-sided pressure-sensitive adhesive tape having the pressure-sensitive adhesive layers on both the surfaces of the base material layer, and the surfaces of the pressure-sensitive adhesive layers on both the surfaces of the base material layer are ground by grinding performed by the grinding means. Furthermore, the pressure-sensitive adhesive tape processing device according to the embodiment of the present invention may be implemented as a combination of the embodiment in which a plurality of the grinding means are included, and the embodiment in which the pressure-sensitive adhesive tape is a double-sided pressure-sensitive adhesive tape having the pressure-sensitive adhesive layers on both the surfaces of the base material layer, and the surfaces of the pressure-sensitive adhesive layers on both the surfaces of the base material layer are ground by grinding performed by the grinding means. Moreover, the pressure-sensitive adhesive tape processing device according to the embodiment of the present invention may include removal means for removing the separated pressure-sensitive adhesive for forming the pressure-sensitive adhesive layer. Any appropriate method may be adopted as the removal means to the extent that the effects of the present invention are not impaired as long as the method allows the separated pressure-sensitive adhesive to be removed. Examples of such a method include a method in which the separated pressure-sensitive adhesive is blown by blowing of gas, a wet removal method in which the pressure-sensitive adhesive is removed by, for example, spraying liquid, and a mechanical removal method in which friction by a brush is used. Specifically, for example, the removal is at least one kind selected from removal in which air blowing is used, removal in which water is sprayed, and removal in which a brush is used.

Examples of the grinding means include a belt sander having an abrasive belt, and an electric tool (hand grinder, precision grinder, electric cutting tool, or the like) having a file (paper, cloth, metal).

In one embodiment of the pressure-sensitive adhesive tape processing device according to the embodiment of the present invention, the tension of the pressure-sensitive adhesive tape is preferably from 0.1 N to 1,000 N, more preferably from 1 N to 900 N, still more preferably from 3 N to 800 N, still more preferably from 5 N to 700 N, still more preferably from 5 N to 600 N, still more preferably from 5 N to 500 N, still more preferably from 5 N to 400 N, still more preferably from 5 N to 300 N, particularly preferably from 5 N to 200 N, and most preferably from 5 N to 100 N, when the pressure-sensitive adhesive layer is ground by the grinding means. If the tension of the pressure-sensitive adhesive tape is excessively low outside the above-described range, the abrasive belt and the pressure-sensitive adhesive layer are not brought into appropriate contact with each other, and the pressure-sensitive adhesive layer may be unevenly ground and may not be effectively ground. If the tension of the pressure-sensitive adhesive tape is excessively high outside the above-described range when the surface of the pressure-sensitive adhesive layer is ground, damage to the base material layer is large, and a recovery rate of the base material layer may be reduced or the base material layer may be broken. Tension control means for adjusting the tension within the above-described range is not particularly limited, and may be selected as appropriate from known tension control means, such as means for controlling a force for pressing the abrasive belt against the pressure-sensitive adhesive tape, and means for changing and controlling a speed ratio between rollers.

One embodiment of the pressure-sensitive adhesive tape processing device according to the embodiment of the present invention includes removal means for removing the separated pressure-sensitive adhesive for forming the pressure-sensitive adhesive layer as described with reference to FIG. 2.

<<Pressure-sensitive adhesive tape to be processed>>

The pressure-sensitive adhesive tape to be processed by the pressure-sensitive adhesive tape processing method according to the embodiment of the present invention is a pressure-sensitive adhesive tape that includes the base material layer and the pressure-sensitive adhesive layer. The pressure-sensitive adhesive tape to be processed may have any appropriate other layer to the extent that the effects of the present invention are not impaired as long as the pressure-sensitive adhesive tape to be processed is a pressure-sensitive adhesive tape that includes the base material layer and the pressure-sensitive adhesive layer. The number of such other layers may be one, or two or more. Examples of such another layer include an antistatic layer and a print layer.

Any appropriate thickness may be adopted as the thickness of the pressure-sensitive adhesive tape to be processed to the extent that the effects of the present invention are not impaired. Such a thickness is preferably from 10 $\mu$m to 600 $\mu$m, more preferably from 20 $\mu$m to 500 $\mu$m, still more preferably from 25 $\mu$m to 350 $\mu$m, and particularly

preferably from 30 $\mu$m to 250 $\mu$m.

«Base material layer»

A storage modulus of the base material layer at 25°C is preferably 2 MPa or more, more preferably 5 MPa or more, still more preferably 7 MPa or more, and particularly preferably 10 MPa or more. From the viewpoint of handleability and the like, the upper limit of the storage modulus at 25°C is preferably 100,000 MPa or less, more preferably 80,000 MPa or less, still more preferably 70,000 MPa or less, and particularly preferably 10,000 MPa or less. In the pressure-sensitive adhesive tape to be processed by the pressure-sensitive adhesive tape processing method according to the embodiment of the present invention, in a case where the storage modulus of the base material layer at 25°C falls within the above-described range, when the surface of the pressure-sensitive adhesive layer of the pressure-sensitive adhesive tape is ground, satisfactory web handling properties can be achieved, and the pressure-sensitive adhesive for forming the pressure-sensitive adhesive layer can be effectively separated from the pressure-sensitive adhesive tape. If the storage modulus of the base material layer at 25°C is excessively low outside the above-described range, when the surface of the pressure-sensitive adhesive layer of the pressure-sensitive adhesive tape is ground, the pressure-sensitive adhesive tape may be broken. If the storage modulus of the base material layer at 25°C is excessively high outside the above-described range, the frequency at which an abrasive falls when the abrasive is in contact with the base material layer, is increased, and the lifespan of the abrasive belt may be shortened and economical efficiency may be reduced.

A base material layer formed from any appropriate material may be adopted as the base material layer to the extent that the effects of the present invention are not impaired. Examples of such a material include a plastic film, a nonwoven fabric, paper, metal foil, a woven fabric, a rubber sheet, a foamed sheet, and a laminate thereof (in particular, a laminate including the plastic film).

Examples of the plastic film include: a plastic film including a polyester-based resin, such as polyethylene terephthalate (PET), polyethylene naphthalate (PEN), or polybutylene terephthalate (PBT); a plastic film including an olefin-based resin containing an $\alpha$-olefin as a monomer component, such as polyethylene (PE), polypropylene (PP), polymethylpentene (PMP), an ethylene-propylene copolymer, or an ethylene-vinyl acetate copolymer (EVA); a plastic film including polyvinyl chloride (PVC); a plastic film including a vinyl acetate-based resin; a plastic film including polycarbonate (PC); a plastic film including polyphenylene sulfide (PPS); a plastic film including an amide-based resin, such as polyamide (nylon) or wholly aromatic polyamide (aramid); a plastic film including a polyimide-based resin; a plastic film including polyether ether ketone (PEEK); a plastic film including an olefin-based resin, such as polyethylene (PE) or polypropylene (PP); a plastic film including a fluorine-based resin, such as polytetrafluoroethylene, polychlorotrifluoroethylene, polyvinyl fluoride, polyvinylidene fluoride, a tetrafluoroethylene-hexafluoropropylene copolymer, or a chlorofluoroethylene-vinylidene fluoride copolymer; and triacetyl cellulose (TAC).

Examples of the nonwoven fabric include: nonwoven fabrics based on natural fibers each having heat resistance such as a nonwoven fabric including Manila hemp; and synthetic resin nonwoven fabrics, such as a polypropylene resin nonwoven fabric, a polyethylene resin nonwoven fabric, and an ester-based resin nonwoven fabric.

The number of the base material layers may be only one, or two or more.

Any appropriate thickness may be adopted as the thickness of the base material layer to the extent that the effects of the present invention are not impaired. Such a thickness is preferably from 7 $\mu$m to 300 $\mu$m, more preferably from 10 $\mu$m to 250 $\mu$m, still more preferably from 15 $\mu$m to 200 $\mu$m, and particularly preferably from 20 $\mu$m to 150 $\mu$m.

The base material layer may be subjected to surface treatment. Examples of the surface treatment include corona treatment, plasma treatment, chromic acid treatment, ozone exposure, flame exposure, high-voltage electric shock exposure, ionizing radiation treatment, and coating treatment with an undercoating agent.

The base material layer may be subjected to backside surface treatment.

The base material layer may have an antistatic layer on the backside surface.

The base material layer may be subjected to antistatic treatment. The base material layer may be subjected to treatment for printing.

The base material layer may contain any appropriate other additive to the extent that the effects of the present invention are not impaired.

<<Pressure-sensitive adhesive layer»

Any appropriate pressure-sensitive adhesive layer may be adopted as the pressure-sensitive adhesive layer to the extent that the effects of the present invention are not impaired. The number of the pressure-sensitive adhesive layers may be only one, or two or more.

Any appropriate thickness may be adopted as the thickness of the pressure-sensitive adhesive layer to the extent that the effects of the present invention are not impaired. Such a thickness is preferably from 3 $\mu$m to 300 $\mu$m, more preferably from 10 $\mu$m to 250 $\mu$m, still more preferably from 10 $\mu$m to 150 $\mu$m, and particularly preferably from 10

μm to 100 μm.

The pressure-sensitive adhesive layer preferably includes at least one kind selected from the group consisting of: an acrylic pressure-sensitive adhesive; a urethane-based pressure-sensitive adhesive; a rubber-based pressure-sensitive adhesive; and a silicone-based pressure-sensitive adhesive.

The pressure-sensitive adhesive layer may be formed by any appropriate method. Examples of such a method include a method including: applying a pressure-sensitive adhesive composition (at least one kind selected from the group consisting of: an acrylic pressure-sensitive adhesive composition; a urethane-based pressure-sensitive adhesive composition; a rubber-based pressure-sensitive adhesive composition; and a silicone-based pressure-sensitive adhesive composition) onto any appropriate base material; heating and drying the obtained product as required; and curing the obtained product as required to form the pressure-sensitive adhesive layer on the base material. Examples of such an application method include methods using a gravure roll coater, a reverse roll coater, a kiss roll coater, a dip roll coater, a bar coater, a knife coater, an air knife coater, a spray coater, a comma coater, a direct coater, a roll brush coater, and a curtain coater.

<Acrylic Pressure-sensitive Adhesive>

The acrylic pressure-sensitive adhesive is formed from the acrylic pressure-sensitive adhesive composition.

The acrylic pressure-sensitive adhesive composition preferably contains an acrylic polymer and a cross-linking agent because the effects of the present invention can be further expressed.

The acrylic polymer is what may be called a base polymer in the field of acrylic pressure-sensitive adhesives. The number of kinds of the acrylic polymers may be only one, or two or more.

The content of the acrylic polymer in the acrylic pressure-sensitive adhesive composition is preferably from 50 wt% to 100 wt%, more preferably from 60 wt% to 100 wt%, still more preferably from 70 wt% to 100 wt%, particularly preferably from 80 wt% to 100 wt%, most preferably from 90 wt% to 100 wt% in terms of solid content.

Any appropriate acrylic polymer may be adopted as the acrylic polymer to the extent that the effects of the present invention are not impaired.

The weight-average molecular weight of the acrylic polymer is preferably from 100,000 to 3,000,000, more preferably from 150,000 to 2,000,000, still more preferably from 200,000 to 1,500,000, particularly preferably from 250,000 to 1,000,000 because the effects of the present invention can be further expressed.

The acrylic polymer is preferably an acrylic polymer formed through polymerization from a composition (A) containing a (meth)acrylic acid alkyl ester whose alkyl ester moiety has an alkyl group having 4 to 12 carbon atoms (component "a"), and at least one kind selected from the group consisting of: a (meth)acrylic acid ester having a OH group; and (meth)acrylic acid (component "b") because the effects of the present invention can be further expressed. The number of kinds of the components "a" and the number of kinds of the components "b" may each be independently only one, or two or more.

Examples of the (meth)acrylic acid alkyl ester whose alkyl ester moiety has an alkyl group having 4 to 12 carbon atoms (component "a") include n-butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. Of those, n-butyl (meth)acrylate and 2-ethylhexyl (meth)acrylate are preferred, and n-butyl acrylate and 2-ethylhexyl acrylate are more preferred because the effects of the present invention can be further expressed.

Examples of the at least one kind selected from the group consisting of: a (meth)acrylic acid ester having a OH group; and (meth)acrylic acid (component "b") include: (meth)acrylic acid esters each having a OH group, such as hydroxyethyl (meth)acrylate, hydroxypropyl (meth)acrylate, and hydroxybutyl (meth)acrylate; and (meth)acrylic acid. Of those, hydroxyethyl (meth)acrylate and (meth)acrylic acid are preferred, and hydroxyethyl acrylate and acrylic acid are more preferred because the effects of the present invention can be further expressed.

The composition (A) may contain a copolymerizable monomer except the component "a" and the component "b". The number of kinds of the copolymerizable monomers may be only one, or two or more. Examples of such copolymerizable monomer include: carboxyl group-containing monomers (provided that (meth)acrylic acid is excluded), such as itaconic acid, maleic acid, fumaric acid, crotonic acid, isocrotonic acid, and acid anhydrides thereof (e.g., acid anhydride group-containing monomers, such as maleic anhydride and itaconic anhydride); amide group-containing monomers, such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl (meth)acrylamide; amino group-containing monomers, such as aminoethyl (meth)acrylate, dimethylaminoethyl (meth)acrylate, and t-butylaminoethyl (meth)acrylate; epoxy group-containing monomers, such as glycidyl (meth)acrylate and methylglycidyl (meth)acrylate; cyano group-containing monomers, such as acrylonitrile and methacrylonitrile; heterocycle-containing vinyl-based monomers, such as N-vinyl-2-pyrrolidone, (meth)acryloylmorpholine, N-vinylpiperidone, N-vinylpiperazine, N-vinylpyrrole, N-vinylimidazole, vinylpy-

ridine, vinylpyridine, and vinyloxazole; sulfonic acid group-containing monomers such as sodium vinylsulfonate; phosphoric acid group-containing monomers such as 2-hydroxyethylacryloyl phosphate; imide group-containing monomers, such as cyclohexylmaleimide and isopropylmaleimide; isocyanate group-containing monomers such as 2-methacryloyloxyethyl isocyanate; (meth)acrylic acid esters each having an alicyclic hydrocarbon group, such as cyclopentyl (meth)acrylate, cyclohexyl (meth)acrylate, and isobornyl (meth)acrylate; (meth)acrylic acid esters each having an aromatic hydrocarbon group, such as phenyl (meth)acrylate, phenoxyethyl (meth)acrylate, and benzyl (meth)acrylate; vinyl esters, such as vinyl acetate and vinyl propionate; aromatic vinyl compounds, such as styrene and vinyltoluene; olefins and dienes, such as ethylene, butadiene, isoprene, and isobutylene; vinyl ethers such as a vinyl alkyl ether; and vinyl chloride.

A polyfunctional monomer may also be adopted as the copolymerizable monomer. The "polyfunctional monomer" refers to a monomer having two or more ethylenically unsaturated groups in a molecule thereof. Any appropriate ethylenically unsaturated groups may be adopted as the ethylenically unsaturated groups to the extent that the effects of the present invention are not impaired. Examples of such ethylenically unsaturated group include radical-polymerizable functional groups, such as a vinyl group, a propenyl group, an isopropenyl group, a vinyl ether group (vinyloxy group), and an allyl ether group (allyloxy group). Examples of the polyfunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate. The number of kinds of such polyfunctional monomers may be only one, or two or more.

A (meth)acrylic acid alkoxyalkyl ester may also be adopted as the copolymerizable monomer. Examples of the (meth)acrylic acid alkoxyalkyl ester include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, and 4-ethoxybutyl (meth)acrylate. The number of kinds of the (meth)acrylic acid alkoxyalkyl esters may be only one, or two or more.

The content of the (meth)acrylic acid alkyl ester whose alkyl ester moiety has an alkyl group having 4 to 12 carbon atoms (component "a") is preferably 50 wt% or more, more preferably from 60 wt% to 100 wt%, still more preferably from 70 wt% to 100 wt%, particularly preferably from 80 wt% to 100 wt% with respect to the total amount (100 wt%) of the monomer components for forming the acrylic polymer because the effects of the present invention can be further expressed.

The content of the at least one kind selected from the group consisting of: a (meth)acrylic acid ester having a OH group; and (meth)acrylic acid (component "b") is preferably 0.1 wt% or more, more preferably from 1.0 wt% to 50 wt%, still more preferably from 1.5 wt% to 40 wt%, particularly preferably from 2.0 wt% to 30 wt% with respect to the total amount (100 wt%) of the monomer components for forming the acrylic polymer because the effects of the present invention can be further expressed.

The composition (A) may contain any appropriate other component to the extent that the effects of the present invention are not impaired. Examples of such other component include a polymerization initiator, a chain transfer agent, and a solvent. Any appropriate content may be adopted as the content of each of those other components to the extent that the effects of the present invention are not impaired.

A thermal polymerization initiator, a photopolymerization initiator (photoinitiator), or the like may be adopted as the polymerization initiator in accordance with the kind of a polymerization reaction. The number of kinds of the polymerization initiators may be only one, or two or more.

The thermal polymerization initiator may be preferably adopted at the time of the production of the acrylic polymer by solution polymerization. Examples of such thermal polymerization initiator include an azo-based polymerization initiator, a peroxide-based polymerization initiator (e.g., dibenzoyl peroxide or tert-butyl permaleate), and a redox-based polymerization initiator. Of those thermal polymerization initiators, an azo-based polymerization initiator disclosed in JP 2002-69411 A is particularly preferred. Such azo-based polymerization initiator is preferred because a decomposed product of the polymerization initiator hardly remains as a portion, which serves as a cause for the generation of a heat-generated gas (outgas), in the acrylic polymer. Examples of the azo-based polymerization initiator include 2,2'-azobisisobutyronitrile (hereinafter sometimes referred to as "AIBN"), 2,2'-azobis-2-methylbutyronitrile (hereinafter sometimes referred to as "AMBN"), dimethyl 2,2'-azobis(2-methylpropionate), and 4,4'-azobis-4-cyanovaleric acid. The usage amount of the azo-based polymerization initiator is preferably from 0.01 part by weight to 5.0 parts by weight, more preferably from 0.05 part by weight to 4.0 parts by weight, still more preferably from 0.1 part by weight to 3.0 parts by weight, particularly preferably from 0.15 part by weight to 3.0 parts by weight, most preferably from 0.20 part by weight to 2.0 parts by weight with respect to the total amount (100 parts by weight) of the monomer components for forming the acrylic polymer.

The photopolymerization initiator may be preferably adopted at the time of the production of the acrylic polymer by active energy ray polymerization. Examples of the photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzil-based photopolymerization initiator, a benzophenone-based photopolymerization initiator, a ketal-based photopolymerization initiator, and a thioxanthone-based photopolymerization initiator.

Examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxydichloroacetophenone, and 4-(t-butyl)dichloroacetophenone. Examples of the $\alpha$-ketol-based photopolymerization initiator include 2-methyl-2-hydroxypropiophenone and 1-[4-(2-hydroxyethyl)phenyl]-2-methylpropan-1-one. An example of the aromatic sulfonyl chloride-based photopolymerization initiator is 2-naphthalenesulfonyl chloride. An example of the photoactive oxime-based photopolymerization initiator is 1-phenyl-1,1-propanedione-2-(o-ethoxycarbonyl)-oxime. An example of the benzoin-based photopolymerization initiator is benzoin. An example of the benzil-based photopolymerization initiator is benzil. Examples of the benzophenone-based photopolymerization initiator include benzophenone, benzoyl benzoic acid, 3,3'-dimethyl-4-methoxybenzophenone, polyvinylbenzophenone, and $\alpha$-hydroxycyclohexyl phenyl ketone. An example of the ketal-based photopolymerization initiator is benzyl dimethyl ketal. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The usage amount of the photopolymerization initiator is preferably from 0.01 part by weight to 3.0 parts by weight, more preferably from 0.015 part by weight to 2.0 parts by weight, still more preferably from 0.02 part by weight to 1.5 parts by weight, particularly preferably from 0.025 part by weight to 1.0 part by weight, most preferably from 0.03 part by weight to 0.50 part by weight with respect to the total amount (100 parts by weight) of the monomer components for forming the acrylic polymer.

The acrylic pressure-sensitive adhesive composition may contain a cross-linking agent. When the cross-linking agent is used, the cohesive strength of the acrylic pressure-sensitive adhesive can be improved, and hence the effects of the present invention can be further expressed. The number of kinds of the cross-linking agents may be only one, or two or more.

Examples of the cross-linking agent include a polyfunctional isocyanate-based cross-linking agent, an epoxy-based cross-linking agent, a melamine-based cross-linking agent, and a peroxide-based cross-linking agent, and as well, a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, at least one kind selected from the group consisting of: a polyfunctional isocyanate-based cross-linking agent; and an epoxy-based cross-linking agent (component "c") is preferred because the effects of the present invention can be further expressed.

Examples of the polyfunctional isocyanate-based cross-linking agent include: lower aliphatic polyisocyanates, such as 1,2-ethylene diisocyanate, 1,4-butylene diisocyanate, and 1,6-hexamethylene diisocyanate; alicyclic polyisocyanates, such as cyclopentylene diisocyanate, cyclohexylene diisocyanate, isophorone diisocyanate, hydrogenated tolylene diisocyanate, and hydrogenated xylene diisocyanate; and aromatic polyisocyanates, such as 2,4-tolylene diisocyanate, 2,6-tolylene diisocyanate, 4,4'-diphenylmethane diisocyanate, and xylylene diisocyanate. Examples of the polyfunctional isocyanate-based cross-linking agent also include commercially available products, such as a trimethylolpropane/tolylene diisocyanate adduct (manufactured by Nippon Polyurethane Industry Co., Ltd., product name: "CORONATE L"), a trimethylolpropane/hexamethylene diisocyanate adduct (manufactured by Nippon Polyurethane Industry Co., Ltd., product name: "CORONATE HL"), a product available under the product name "CORONATE HX" (Nippon Polyurethane Industry Co., Ltd.), and a trimethylolpropane/xylylene diisocyanate adduct (manufactured by Mitsui Chemicals, Inc., product name: "TAKENATE 110N").

Examples of the epoxy-based cross-linking agent (polyfunctional epoxy compound) include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcinol diglycidyl ether, bisphenol-S-diglycidyl ether, and an epoxy-based resin having two or more epoxy groups in a molecule thereof. Examples of the epoxy-based cross-linking agent also include commercially available products such as a product available under the product name "TETRAD-C" (manufactured by Mitsubishi Gas Chemical Company, Inc.).

Any appropriate content may be adopted as the content of the cross-linking agent in the acrylic pressure-sensitive adhesive composition to the extent that the effects of the present invention are not impaired. Such content is, for example, preferably from 0.1 part by weight to 5.0 parts by weight, more preferably from 0.2 part by weight to 4.5 parts by weight, still more preferably from 0.3 part by weight to 4.0 parts by weight, particularly preferably from 0.4 part by weight to 3.5 parts by weight with respect to the solid content (100 parts by weight) of the acrylic polymer because the effects of the present invention can be further expressed.

The acrylic pressure-sensitive adhesive composition may contain any appropriate other component to the extent that the effects of the present invention are not impaired. Examples of such other component include a polymer component except the acrylic polymer, a cross-linking accelerator, a cross-linking catalyst, a silane coupling agent, a tackifier resin (e.g., a rosin derivative, a polyterpene resin, a petroleum resin, or an oil-soluble phenol), an age resistor, an inorganic filler, an organic filler, a metal powder, a colorant (e.g., a pigment or a dye), a foil-like material, a UV absorber, an antioxidant, a light stabilizer, a chain transfer agent, a plasticizer, a softening agent, a surfactant, an antistatic agent, a conductive agent, a stabilizer, a surface lubricant, a leveling agent, a corrosion inhibitor, a heat stabilizer, a polymerization inhibitor, a lubricant, a solvent, and a catalyst.

<Urethane-based Pressure-sensitive Adhesive>

The urethane-based pressure-sensitive adhesive is formed of the urethane-based pressure-sensitive adhesive composition.

The urethane-based pressure-sensitive adhesive composition preferably contains at least one kind selected from the group consisting of: a urethane prepolymer; and a polyol, and a cross-linking agent because the effects of the present invention can be further expressed.

The at least one kind selected from the group consisting of: a urethane prepolymer; and a polyol is what may be called a base polymer in the field of urethane-based pressure-sensitive adhesives. The number of kinds of the urethane prepolymers may be only one, or two or more. The number of kinds of the polyols may be only one, or two or more.

[Urethane Prepolymer]

The urethane prepolymer is preferably a polyurethane polyol, more preferably a product obtained by allowing one of a polyester polyol (a1) or a polyether polyol (a2) alone, or a mixture of (a1) and (a2) to react with an organic polyisocyanate compound (a3) in the presence or absence of a catalyst.

Any appropriate polyester polyol may be used as the polyester polyol (a1). Such polyester polyol (a1) is, for example, a polyester polyol obtained by allowing an acid component and a glycol component to react with each other. Examples of the acid component include terephthalic acid, adipic acid, azelaic acid, sebacic acid, phthalic anhydride, isophthalic acid, and trimellitic acid. Examples of the glycol component include ethylene glycol, propylene glycol, diethylene glycol, butylene glycol, 1,6-hexane glycol, 3-methyl-1,5-pentanediol, 3,3'-dimethylolheptane, polyoxyethylene glycol, polyoxypropylene glycol, 1,4-butanediol, neopentyl glycol, butylethylpentanediol, and glycerin, trimethylolpropane, or pentaerythritol serving as a polyol component. Other examples of the polyester polyol (a1) include polyester polyols obtained by subjecting lactones, such as polycaprolactone, poly($\beta$-methyl-$\gamma$-valerolactone), and polyvalerolactone, to ring-opening polymerization.

Any value in the range of from a low molecular weight to a high molecular weight may be used as the molecular weight of the polyester polyol (a1). The molecular weight of the polyester polyol (a1) is preferably from 100 to 100,000 in terms of number-average molecular weight because the effects of the present invention can be further expressed. When the number-average molecular weight is less than 100, there is a risk in that the reactivity of the polyol becomes higher, and hence the polyol is liable to gel. When the number-average molecular weight is more than 100,000, there is a risk in that the reactivity reduces, and the cohesive strength of the polyurethane polyol itself reduces. The usage amount of the polyester polyol (a1) is preferably from 0 mol% to 90 mol% in the polyols for forming the polyurethane polyol because the effects of the present invention can be further expressed.

Any appropriate polyether polyol may be used as the polyether polyol (a2). Such polyether polyol (a2) is, for example, a polyether polyol obtained by polymerizing an oxirane compound, such as ethylene oxide, propylene oxide, butylene oxide, or tetrahydrofuran, through use of water or a low-molecular weight polyol, such as propylene glycol, ethylene glycol, glycerin, or trimethylolpropane, as an initiator. Such polyether polyol (a2) is specifically, for example, a polyether polyol having 2 or more functional groups, such as polypropylene glycol, polyethylene glycol, or polytetramethylene glycol.

Any value in the range of from a low molecular weight to a high molecular weight may be used as the molecular weight of the polyether polyol (a2). The molecular weight of the polyether polyol (a2) is preferably from 100 to 100,000 in terms of number-average molecular weight because the effects of the present invention can be further expressed. When the number-average molecular weight is less than 100, there is a risk in that the reactivity of the polyol becomes higher, and hence the polyol is liable to gel. When the number-average molecular weight is more than 100,000, there is a risk in that the reactivity reduces, and the cohesive strength of the polyurethane polyol itself reduces. The usage amount of the polyether polyol (a2) is preferably from 0 mol% to 90 mol% in the polyols for forming the polyurethane polyol because the effects of the present invention can be further expressed.

A product obtained by substituting part of the polyether polyol (a2) with, for example, a glycol, such as ethylene glycol, 1,4-butanediol, neopentyl glycol, butylethylpentanediol, glycerin, trimethylolpropane, or pentaerythritol, or a polyvalent amine, such as ethylenediamine, N-aminoethylethanolamine, isophoronediamine, or xylylenediamine, as required may be used in combination.

Only a bifunctional polyether polyol may be used as the polyether polyol (a2), or a polyether polyol having a number-average molecular weight of from 100 to 100,000 and having at least 3 hydroxy groups in a molecule thereof may be partially or wholly used. When the polyether polyol having a number-average molecular weight of from 100 to 100,000 and having at least 3 hydroxy groups in a molecule thereof is partially or wholly used as the polyether polyol (a2), the effects of the present invention can be further expressed, and a balance between the pressure-sensitive adhesive strength and peelability of the pressure-sensitive adhesive layer can become satisfactory. When the number-average molecular weight in such polyether polyol is less than 100, there is a risk in that its reactivity becomes higher, and hence the polyol is liable to gel. In addition, when the number-average molecular weight in such polyether polyol is more than 100,000, there is a risk in that the reactivity reduces, and the cohesive strength of the polyurethane polyol itself reduces. The number-average molecular weight of such polyether polyol is more preferably from 100 to 10,000 because the effects of the present invention can be further expressed.

Any appropriate polyisocyanate compound may be used as the organic polyisocyanate compound (a3). Examples of such organic polyisocyanate compound (a3) include an aromatic polyisocyanate, an aliphatic polyisocyanate, an aromatic aliphatic polyisocyanate, and an alicyclic polyisocyanate.

Examples of the aromatic polyisocyanate include 1,3-phenylene diisocyanate, 4,4'-diphenyl diisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanatotoluene, 1,3,5-triisocyanatobenzene, dianisidine diisocyanate, 4,4'-diphenyl ether diisocyanate, and 4,4',4"-triphenylmethane triisocyanate.

Examples of the aliphatic polyisocyanate include trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the aromatic aliphatic polyisocyanate include $\omega,\omega'$-diisocyanato-1,3-dimethylbenzene, $\omega,\omega'$-diisocyanato-1,4-dimethylbenzene, $\omega,\omega'$-diisocyanato-1,4-diethylbenzene, 1,4-tetramethylxylylene diisocyanate, and 1,3-tetramethylxylylene diisocyanate.

Examples of the alicyclic polyisocyanate include 3-isocyanatomethyl-3,5,5-trimethylcyclohexyl isocyanate, 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), and 1,4-bis(isocyanatomethyl)cyclohexane.

A trimethylolpropane adduct of any such compound as described above, a biuret thereof formed by a reaction with water, a trimer thereof having an isocyanurate ring, or the like may be used as the organic polyisocyanate compound (a3) in combination with the above-mentioned compound.

Any appropriate catalyst may be used as a catalyst that may be used in obtaining the polyurethane polyol. Examples of such catalyst include a tertiary amine-based compound and an organometallic compound.

Examples of the tertiary amine-based compound include triethylamine, triethylenediamine, and 1,8-diazabicyclo(5,4,0)-undecene-7 (DBU).

Examples of the organometallic compound include a tin-based compound and a non-tin-based compound.

Examples of the tin-based compound include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate.

Examples of the non-tin-based compound include: titanium-based compounds, such as dibutyltitanium dichloride, tetrabutyl titanate, and butoxytitanium trichloride; lead-based compounds, such as lead oleate, lead 2-ethylhexanoate, lead benzoate, and lead naphthenate; iron-based compounds, such as iron 2-ethylhexanoate and iron acetylacetonate; cobalt-based compounds, such as cobalt benzoate and cobalt 2-ethylhexanoate; zinc-based compounds, such as zinc naphthenate and zinc 2-ethylhexanoate; and zirconium-based compounds such as zirconium naphthenate.

When the catalyst is used in obtaining the polyurethane polyol, in a system where the two kinds of polyols, that is, the polyester polyol and the polyether polyol are present, a single catalyst system is liable to cause a problem in that the polyols gel or a reaction solution becomes cloudy owing to a difference in reactivity between the polyols. In view of the foregoing, when two kinds of catalysts are used in obtaining the polyurethane polyol, it becomes easier to control a reaction rate, the selectivity of the catalysts, and the like, and hence such problem can be solved. Examples of the combination of such two kinds of catalysts include: the combination of a tertiary amine-based compound and an organometallic compound; the combination of a tin-based compound and a non-tin-based compound; and the combination of a tin-based compound and another tin-based compound. Of those, the combination of a tin-based compound and another tin-based compound is preferred, and the combination of dibutyltin dilaurate and tin 2-ethylhexanoate is more preferred. A blending ratio "tin 2-ethylhexanoate/dibutyltin dilaurate" is preferably less than 1, more preferably from 0.2 to 0.6 in terms of weight ratio. When the blending ratio is 1 or more, the polyols may be liable to gel owing to a poor balance between the catalytic activities of the catalysts.

When the catalyst is used in obtaining the polyurethane polyol, the usage amount of the catalyst is preferably from 0.01 wt% to 1.0 wt% with respect to the total amount of the polyester polyol (a1), the polyether polyol (a2), and the organic polyisocyanate compound (a3).

When the catalyst is used in obtaining the polyurethane polyol, a reaction temperature is preferably less than 100°C, more preferably from 85°C to 95°C. When the temperature is 100°C or more, it may be difficult to control the reaction rate and the cross-linked structure of the polyurethane polyol, and hence a polyurethane polyol having a predetermined molecular weight may be hardly obtained.

No catalyst may be used in obtaining the polyurethane polyol. In that case, the reaction temperature is preferably 100°C or more, more preferably 110°C or more. In addition, when the polyurethane polyol is obtained in the absence of any catalyst, the polyols (a1) and (a2), and the compound (a3) are preferably allowed to react with each other for 3 hours or more.

A method of obtaining the polyurethane polyol is, for example, (1) a method involving loading the total amount of the polyester polyol, the polyether polyol, the catalyst, and the organic polyisocyanate compound into a flask, or (2) a method involving loading the polyester polyol, the polyether polyol, and the catalyst into a flask, and adding the organic polyisocyanate compound to the mixture. Of those, the method (2) is preferred as a method of obtaining the polyurethane polyol in terms of the control of the reaction.

Any appropriate solvent may be used in obtaining the polyurethane polyol. Examples of such solvent include methyl ethyl ketone, ethyl acetate, toluene, xylene, and acetone. Of those solvents, toluene is preferred.

[Polyol]

Preferred examples of the polyol include polyester polyol, polyether polyol, polycaprolactone polyol, polycarbonate polyol, and castor oil-based polyol. The polyol is more preferably polyether polyol.

The polyester polyol may be obtained through, for example, an esterification reaction between a polyol component and an acid component.

Examples of the polyol component include ethylene glycol, diethylene glycol, 1,3-butanediol, 1,4-butanediol, neopentyl glycol, 3-methyl-1,5-pentanediol, 2-butyl-2-ethyl-1,3-propanediol, 2,4-diethyl-1,5-pentanediol, 1,2-hexanediol, 1,6-hexanediol, 1,8-octanediol, 1,9-nonanediol, 2-methyl-1,8-octanediol, 1,8-decanediol, octadecanediol, glycerin, trimethylolpropane, pentaerythritol, hexanetriol, and polypropylene glycol. Examples of the acid component include succinic acid, methylsuccinic acid, adipic acid, pimelicacid, azelaicacid, sebacicacid, 1,12-dodecanedioic acid, 1,14-tetradecanedioic acid, dimer acid, 2-methyl-1,4-cyclohexanedicarboxylic acid, 2-ethyl-1,4-cyclohexanedicarboxylic acid, terephthalic acid, isophthalic acid, phthalic acid, 1,4-naphthalenedicarboxylic acid, 4,4'-biphenyldicarboxylic acid, and acid anhydrides thereof.

An example of the polyether polyol is a polyether polyol obtained by subjecting water, a low-molecular polyol (e.g., propylene glycol, ethylene glycol, glycerin, trimethylolpropane, or pentaerythritol), a bisphenol (e.g., bisphenol A), or a dihydroxybenzene (e.g., catechol, resorcin, or hydroquinone) serving as an initiator to addition polymerization with an alkylene oxide, such as ethylene oxide, propylene oxide, or butylene oxide. Specific examples thereof include polyethylene glycol, polypropylene glycol, and polytetramethylene glycol.

An example of the polycaprolactone polyol is a caprolactone-based polyester diol obtained by subjecting a cyclic ester monomer, such as ε-caprolactone or σ-valerolactone, to ring-opening polymerization.

Examples of the polycarbonate polyol include: a polycarbonate polyol obtained by subjecting the polyol component and phosgene to a polycondensation reaction; a polycarbonate polyol obtained by subjecting the polyol component and a carbonate diester, such as dimethyl carbonate, diethyl carbonate, dipropyl carbonate, diisopropyl carbonate, dibutyl carbonate, ethylbutyl carbonate, ethylene carbonate, propylene carbonate, diphenyl carbonate, or dibenzyl carbonate, to transesterification condensation; a copolymerized polycarbonate polyol obtained by using two or more kinds of the polyol components in combination; a polycarbonate polyol obtained by subjecting any of the various polycarbonate polyols and a carboxyl group-containing compound to an esterification reaction; a polycarbonate polyol obtained by subjecting any of the various polycarbonate polyols and a hydroxyl group-containing compound to an etherification reaction; a polycarbonate polyol obtained by subjecting any of the various polycarbonate polyols and an ester compound to a transesterification reaction; a polycarbonate polyol obtained by subjecting any of the various polycarbonate polyols and a hydroxyl group-containing compound to a transesterification reaction; a polyester-based polycarbonate polyol obtained by subjecting any of the various polycarbonate polyols and a dicarboxylic acid compound to a polycondensation reaction; and a copolymerized polyether-based polycarbonate polyol obtained by subjecting any of the various polycarbonate polyols and an alkylene oxide to copolymerization.

An example of the castor oil-based polyol is a castor oil-based polyol obtained by allowing a castor oil fatty acid and the polyol component to react with each other. A specific example thereof is a castor oil-based polyol obtained by allowing a castor oil fatty acid and polypropylene glycol to react with each other.

The number-average molecular weight Mn of the polyols is preferably from 300 to 100,000, more preferably from 400 to 75,000, still more preferably from 450 to 50,000, particularly preferably from 500 to 30,000 because the effects of the present invention can be further expressed.

The polyols preferably contain a polyol (A1) having 3 OH groups and having a number-average molecular weight Mn of from 300 to 100,000 because the effects of the present invention can be further expressed. The number of kinds of the polyols (A1) may be only one, or two or more.

The content of the polyol (A1) in the polyols is preferably 5 wt% or more, more preferably from 25 wt% to 100 wt%, still more preferably from 50 wt% to 100 wt% because the effects of the present invention can be further expressed.

The number-average molecular weight Mn of the polyol (A1) is preferably from 1,000 to 100,000, more preferably more than 1,000 and 80,000 or less, still more preferably from 1,100 to 70,000, still more preferably from 1,200 to 60,000, still more preferably from 1,300 to 50,000, still more preferably from 1,400 to 40,000, still more preferably from 1,500 to 35,000, particularly preferably from 1,700 to 32,000, most preferably from 2,000 to 30,000 because the effects of the present invention can be further expressed.

The polyols may contain a polyol (A2) having 3 or more OH groups and having a number-average molecular weight Mn of 20,000 or less. The number of kinds of the polyols (A2) may be only one, or two or more. The number-average molecular weight Mn of the polyol (A2) is preferably from 100 to 20,000, more preferably from 150 to 10,000, still more preferably from 200 to 7,500, particularly preferably from 300 to 6,000, most preferably from 300 to 5,000 because the effects of the present invention can be further expressed. Preferred examples of the polyol (A2) include a polyol having 3 OH groups (triol), a polyol having 4 OH groups (tetraol), a polyol having 5 OH groups (pentaol), and a polyol having 6 OH groups (hexaol) because the effects of the present invention can be further expressed.

The total amount of the polyol having 4 OH groups (tetraol), the polyol having 5 OH groups (pentaol), and the polyol having 6 OH groups (hexaol) each serving as the polyol (A2) is preferably 70 wt% or less, more preferably 60 wt% or less, still more preferably 40 wt% or less, particularly preferably 30 wt% or less in terms of content in the polyols because the effects of the present invention can be further expressed.

The content of the polyol (A2) in the polyols is preferably 95 wt% or less, more preferably from 0 wt% to 75 wt% because the effects of the present invention can be further expressed.

The content of a polyol having 4 or more OH groups and having a number-average molecular weight Mn of 20,000 or less serving as the polyol (A2) is preferably less than 70 wt%, more preferably 60 wt% or less, still more preferably 50 wt% or less, particularly preferably 40 wt% or less, most preferably 30 wt% or less with respect to the entirety of the polyols because the effects of the present invention can be further expressed.

[Cross-linking Agent]

The urethane-based pressure-sensitive adhesive composition preferably contains a cross-linking agent because the effects of the present invention can be further expressed.

The urethane prepolymer and the polyol serving as base polymers may each be a component for the urethane-based pressure-sensitive adhesive composition when combined with the cross-linking agent.

The cross-linking agent to be combined with the urethane prepolymer and the polyol serving as base polymers is preferably a polyfunctional isocyanate-based cross-linking agent because the effects of the present invention can be further expressed.

Any appropriate polyfunctional isocyanate-based cross-linking agent that may be used for a urethanization reaction may be adopted as the polyfunctional isocyanate-based cross-linking agent. Examples of such polyfunctional isocyanate-based cross-linking agent include: lower aliphatic polyisocyanates, such as 1,2-ethylene diisocyanate, 1,4-butylene diisocyanate, and 1,6-hexamethylene diisocyanate; alicyclic polyisocyanates, such as cyclopentylene diisocyanate, cyclohexylene diisocyanate, isophorone diisocyanate, hydrogenated tolylene diisocyanate, and hydrogenated xylene diisocyanate; and aromatic polyisocyanates, such as 2,4-tolylene diisocyanate, 2,6-tolylene diisocyanate, 4,4'-diphenylmethane diisocyanate, and xylylene diisocyanate. Examples of the polyfunctional isocyanate-based cross-linking agent also include commercially available products, such as a trimethylolpropane/tolylene diisocyanate adduct (manufactured by Nippon Polyurethane Industry Co., Ltd., product name: "CORONATE L"), a trimethylolpropane/hexamethylene diisocyanate adduct (manufactured by Nippon Polyurethane Industry Co., Ltd., product name: "CORONATE HL"), a product available under the product name "CORONATE HX" (Nippon Polyurethane Industry Co., Ltd.), and a trimethylolpropane/xylylene diisocyanate adduct (manufactured by Mitsui Chemicals, Inc., product name: "TAKENATE 110N").

[Urethane-based Pressure-sensitive Adhesive Composition]

The urethane-based pressure-sensitive adhesive composition may contain any appropriate other component to the extent that the effects of the present invention are not impaired. Examples of such other component include a polymer component except the urethane-based prepolymer and the polyol, a cross-linking accelerator, a cross-linking catalyst, a silane coupling agent, a tackifier resin (e.g., a rosin derivative, a polyterpene resin, a petroleum resin, or an oil-soluble phenol), an age resistor, an inorganic filler, an organic filler, a metal powder, a colorant (e.g., a pigment or a dye), a foil-like material, a deterioration-preventing agent, a chain transfer agent, a plasticizer, a softening agent, a surfactant, an antistatic agent, a conductive agent, a stabilizer, a surface lubricant, a leveling agent, a corrosion inhibitor, a heat stabilizer, a polymerization inhibitor, a lubricant, a solvent, and a catalyst.

The urethane-based pressure-sensitive adhesive composition preferably contains a deterioration-preventing agent because the effects of the present invention can be further expressed. The number of kinds of the deterioration-preventing agents may be only one, or two or more.

Preferred examples of the deterioration-preventing agent include an antioxidant, a UV absorber, and a light stabilizer because the effects of the present invention can be further expressed.

Examples of the antioxidant include a radical chain inhibitor and a peroxide decomposer.

Examples of the radical chain inhibitor include a phenol-based antioxidant and an amine-based antioxidant.

Examples of the phenol-based antioxidant include a monophenol-based antioxidant, a bisphenol-based antioxidant, and a polymer-type phenol-based antioxidant. Examples of the monophenol-based antioxidant include 2,6-di-t-butyl-p-cresol, butylated hydroxyanisole, 2,6-di-t-butyl-4-ethylphenol, and stearin-β-(3,5-di-t-butyl-4-hydroxyphenyl)propionate. Examples of the bisphenol-based antioxidant include 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), and 3,9-bis[1,1-dimethyl-2-[β-(3-t-butyl-4-hydroxy-5-methylphenyl)propionyloxy]ethyl]2,4,8,10-tetraoxaspiro[5,5]undecane. Examples of the polymer-type phenol-based antioxidant include 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis-[methylene-3-(3',5'-di-t-butyl-4'-hydroxyphenyl)propionate]methane, bis[3,3'-bis-(4'-hydroxy-3'-t-butylphenyl)butyric acid] glycol ester, 1,3,5-tris(3',5'-di-t-butyl-4'-hydroxybenzyl)-S-triazine-2,4,6-(1H,3H,5H)trione, and tocopherol.

Examples of the peroxide decomposer include a sulfur-based antioxidant and a phosphorus-based antioxidant. Examples of the sulfur-based antioxidant include dilauryl 3,3'-thiodipropionate, dimyristyl 3,3'-thiodipropionate, and distearyl 3,3'-thiodipropionate. Examples of the phosphorus-based antioxidant include triphenyl phosphite, diphenyl isodecyl phosphite, and phenyl diisodecyl phosphite.

Examples of the UV absorber include a benzophenone-based UV absorber, a benzotriazole-based UV absorber, a salicylic acid-based UV absorber, an oxanilide-based UV absorber, a cyanoacrylate-based UV absorber, and a triazine-based UV absorber.

Examples of the benzophenone-based UV absorber include 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-dimethoxybenzophenone, 2,2'-dihydroxy-4,4'-dimethoxybenzophenone, 2-hydroxy-4-methoxy-5-sulfobenzophenone, and bis(2-methoxy-4-hydroxy-5-benzoylphenyl)methane.

Examples of the benzotriazole-based UV absorber include 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6",-tetrahydrophthalimidomethyl)-5'-methylphenyl]benzotriazole, 2,2'-methylenebis[4-(1,1,3,3-tetramethylbutyl)-6-(2H-benzotriazol-2-yl)phenol], and 2-(2'-hydroxy-5'-methacryloxyphenyl)-2H-benzotriazole.

Examples of the salicylic acid-based UV absorber include phenyl salicylate, p-tert-butylphenyl salicylate, and p-octylphenyl salicylate.

Examples of the cyanoacrylate-based UV absorber include 2-ethylhexyl-2-cyano-3,3'-diphenyl acrylate, and ethyl-2-cyano-3,3'-diphenyl acrylate.

Examples of the light stabilizer include a hindered amine-based light stabilizer and a UV stabilizer. Examples of the hindered amine-based light stabilizer include bis(2,2,6,6-tetramethyl-4-piperidyl) sebacate, bis(1,2,2,6,6-pentamethyl-4-piperidyl) sebacate, and methyl-1,2,2,6,6-pentamethyl-4-piperidyl sebacate. Examples of the UV stabilizer include nickel bis(octylphenyl) sulfide, [2,2'-thiobis(4-tert-octylphenolate)]-n-butylamine nickel, nickel complex-3,5-di-tert-butyl-4-hydroxybenzyl-phosphoric acid monoethylate, a benzoate-type quencher, and nickel-dibutyl dithiocarbamate.

[Urethane-based Polymer formed from Urethane-based Pressure-sensitive Adhesive Composition containing Urethane Prepolymer and Polyfunctional Isocyanate-based Cross-linking Agent]

The number of kinds of the urethane prepolymers may be only one, or two or more. The number of kinds of the polyfunctional isocyanate-based cross-linking agents may be only one, or two or more.

Any appropriate production method may be adopted as a method of forming the urethane-based polymer from the urethane-based pressure-sensitive adhesive composition containing the urethane prepolymer and the polyfunctional isocyanate-based cross-linking agent as long as the production method is a method of producing a urethane-based polymer through use of a so-called "urethane prepolymer" as a raw material.

The number-average molecular weight Mn of the urethane prepolymer is preferably from 3,000 to 1,000,000 because the effects of the present invention can be further expressed.

An equivalent ratio "NCO group/OH group" between an NCO group and a OH group in the urethane prepolymer and the polyfunctional isocyanate-based cross-linking agent is preferably 5.0 or less, more preferably from 0.01 to 4.75, still more preferably from 0.02 to 4.5, particularly preferably from 0.03 to 4.25, most preferably from 0.05 to 4.0 because the effects of the present invention can be further expressed.

The content of the polyfunctional isocyanate-based cross-linking agent is preferably from 0.01 part by weight to 30 parts by weight, more preferably from 0.05 part by weight to 25 parts by weight, still more preferably from 0.1 part by weight to 20 parts by weight, particularly preferably from 0.5 part by weight to 17.5 parts by weight, most preferably from 1 part by weight to 15 parts by weight with respect to 100 parts by weight of the urethane prepolymer because the effects of the present invention can be further expressed.

[Urethane-based Polymer formed from Urethane-based Pressure-sensitive Adhesive Composition containing Polyol and Polyfunctional Isocyanate-based Cross-linking Agent]

The number of kinds of the polyols may be only one, or two or more. The number of kinds of the polyfunctional isocyanate-based cross-linking agents may be only one, or two or more.

An equivalent ratio "NCO group/OH group" between an NCO group and a OH group in the polyol and the polyfunctional isocyanate-based cross-linking agent is preferably 5.0 or less, more preferably from 0.1 to 3.0, still more preferably from 0.2 to 2.5, particularly preferably from 0.3 to 2.25, most preferably from 0.5 to 2.0 because the effects of the present invention can be further expressed.

The content of the polyfunctional isocyanate-based cross-linking agent is preferably from 1.0 part by weight to 30 parts by weight, more preferably from 1.5 parts by weight to 27 parts by weight, still more preferably from 2.0 parts by weight to 25 parts by weight, particularly preferably from 2.3 parts by weight to 23 parts by weight, most preferably from 2.5 parts by weight to 20 parts by weight with respect to 100 parts by weight of the polyol because the effects of the present invention can be further expressed.

Specifically, the urethane-based polymer formed from the urethane-based pressure-sensitive adhesive composition containing the polyol and the polyfunctional isocyanate-based cross-linking agent is preferably formed by curing the urethane-based pressure-sensitive adhesive composition containing the polyol and the polyfunctional isocyanate-based cross-linking agent. As a method of forming the urethane-based polymer by curing the urethane-based pressure-sensitive adhesive composition containing the polyol and the polyfunctional isocyanate-based cross-linking agent, there may be adopted any appropriate method such as a urethanization reaction method making use of, for example, bulk polymerization or solution polymerization to the extent that the effects of the present invention are not impaired.

A catalyst is preferably used for curing the urethane-based pressure-sensitive adhesive composition containing the polyol and the polyfunctional isocyanate-based cross-linking agent. Examples of such catalyst include an organometallic compound and a tertiary amine compound.

Examples of the organometallic compound may include an iron-based compound, a tin-based compound, a titanium-based compound, a zirconium-based compound, a lead-based compound, a cobalt-based compound, and a zinc-based compound. Of those, an iron-based compound and a tin-based compound are preferred from the viewpoints of a reaction rate and the pot life of the pressure-sensitive adhesive layer.

Examples of the iron-based compound include iron acetylacetonate, iron 2-ethylhexanoate, and Nacem Ferric Iron.

Examples of the tin-based compound include dibutyltin dichloride, dibutyltin oxide, dibutyltin dibromide, dibutyltin maleate, dibutyltin dilaurate, dibutyltin diacetate, dibutyltin sulfide, tributyltin methoxide, tributyltin acetate, triethyltin ethoxide, tributyltin ethoxide, dioctyltin oxide, dioctyltin dilaurate, tributyltin chloride, tributyltin trichloroacetate, and tin 2-ethylhexanoate.

Examples of the titanium-based compound include dibutyltitanium dichloride, tetrabutyl titanate, and butoxytitanium trichloride.

Examples of the zirconium-based compound include zirconium naphthenate and zirconium acetylacetonate.

Examples of the lead-based compound include lead oleate, lead 2-ethylhexanoate, lead benzoate, and lead naphthenate.

Examples of the cobalt-based compound include cobalt 2-ethylhexanoate and cobalt benzoate.

Examples of the zinc-based compound include zinc naphthenate and zinc 2-ethylhexanoate.

Examples of the tertiary amine compound include triethylamine, triethylenediamine, and 1,8-diazabicyclo-(5,4,0)-undecene-7.

The number of kinds of the catalysts may be only one, or two or more. In addition, the catalyst may be used in combination with, for example, a cross-linking retarder. The amount of the catalyst is preferably from 0.005 part by weight to 1.00 part by weight, more preferably from 0.01 part by weight to 0.75 part by weight, still more preferably from 0.01 part by weight to 0.50 part by weight, particularly preferably from 0.01 part by weight to 0.20 part by weight with respect to 100 parts by weight of the polyol because the effects of the present invention can be further expressed.

<Rubber-based Pressure-sensitive Adhesive>

For example, any appropriate rubber-based pressure-sensitive adhesive such as a known rubber-based pressure-sensitive adhesive described in JP 2015-074771 A or the like may be adopted as the rubber-based pressure-sensitive adhesive to the extent that the effects of the present invention are not impaired. The number of kinds thereof may be only one, or two or more. The rubber-based pressure-sensitive adhesive may contain any appropriate component to the extent that the effects of the present invention are not impaired.

<Silicone-based Pressure-sensitive Adhesive>

For example, any appropriate silicone-based pressure-sensitive adhesive such as a known silicone-based pressure-sensitive adhesive described in JP 2014-047280 A or the like may be adopted as the silicone-based pressure-sensitive adhesive to the extent that the effects of the present invention are not impaired. The number of kinds thereof may be only one, or two or more. The silicone-based pressure-sensitive adhesive may contain any appropriate component to the extent that the effects of the present invention are not impaired.

<<Separator>>

The pressure-sensitive adhesive tape may include a separator in order to, for example, protect the pressure-sensitive adhesive layer. The thickness of the separator is preferably from 5 $\mu$m to 250 $\mu$m because the effects of the present invention can be further expressed.
The separator include a resin base material film.
Examples of the resin base material film include: a plastic film including a polyester-based resin, such as polyethylene terephthalate (PET), polyethylene naphthalate (PEN), or polybutylene terephthalate (PBT); a plastic film including an olefin-based resin containing an $\alpha$-olefin as a monomer component, such as polyethylene (PE), polypropylene (PP), polymethylpentene (PMP), an ethylene-propylene copolymer, or an ethylene-vinyl acetate copolymer (EVA); a plastic film including polyvinyl chloride (PVC); a plastic film including a vinyl acetate-based resin; a plastic film including polycarbonate (PC); a plastic film including polyphenylene sulfide (PPS); a plastic film including an amide-based resin, such as polyamide (nylon) or wholly aromatic polyamide (aramid); a plastic film including a polyimide-based resin; a plastic film including polyether ether ketone (PEEK); a plastic film including an olefin-based resin, such as polyethylene (PE) or polypropylene (PP); a plastic film including a fluorine-based resin, such as polytetrafluoroethylene, polychlorotrifluoroethylene, polyvinyl fluoride, polyvinylidene fluoride, a tetrafluoroethylene-hexafluoropropylene copolymer, or a chlorofluoroethylene-vinylidene fluoride copolymer; and triacetyl cellulose (TAC).
The number of the resin base material films may be only one, or two or more. The resin base material film may be stretched.
The resin base material film may be subjected to surface treatment. Examples of the surface treatment include corona treatment, plasma treatment, chromic acid treatment, ozone exposure, flame exposure, high-voltage electric shock exposure, ionizing radiation treatment, and coating treatment with an undercoating agent.
The resin base material film may contain any appropriate additive to the extent that the effects of the present invention are not impaired.
The separator may have a release layer for increasing its peelability from the pressure-sensitive adhesive layer. When the separator has the release layer, the release layer side thereof is directly laminated on the pressure-sensitive adhesive layer.
Any appropriate formation material may be adopted as a formation material for the release layer to the extent that the effects of the present invention are not impaired. Examples of such formation material include a silicone-based release agent, a fluorine-based release agent, a long-chain alkyl-based release agent, and a fatty acid amide-based release agent. Of those, a silicone-based release agent is preferred. The release layer may be formed as an applied layer.
Any appropriate thickness may be adopted as the thickness of the release layer depending on purposes to the extent that the effects of the present invention are not impaired. Such thickness is preferably from 10 nm to 2,000 nm.
The number of the release layers may be only one, or two or more.
As a silicone-based release layer, there is given, for example, an addition reaction-type silicone resin. Specific examples of the addition reaction-type silicone resin include: KS-774, KS-775, KS-778, KS-779H, KS-847H, and KS-847T manufactured by Shin-Etsu Chemical Co., Ltd.; TPR-6700, TPR-6710, and TPR-6721 manufactured by Toshiba Silicone Co., Ltd.; and SD7220 and SD7226 manufactured by Dow Corning Toray Co., Ltd. The application amount of the silicone-based release layer (after its drying) is preferably from 0.01 g/m2 to 2 g/m2, more preferably from 0.01 g/m2 to 1 g/m2, still more preferably from 0.01 g/m2 to 0.5 g/m2.

The release layer may be formed by, for example, applying the above-mentioned formation material onto any appropriate layer by a hitherto known application method, such as reverse gravure coating, bar coating, or die coating, and then curing the formation material through heat treatment, which is typically performed at from about 120°C to about 200°C. In addition, as required, the heat treatment and active energy ray irradiation such as UV irradiation may be used in combination.

Examples

The present invention is specifically described below by way of Examples. However, the present invention is by no means limited to these Examples. Test and evaluation methods in Examples and the like are as described below. The description "part(s)" means "part(s) by weight" unless otherwise specified, and the description "%" means "wt%" unless otherwise specified. "Room temperature" represents 25°C.

<Measurement of tension of pressure-sensitive adhesive tape>

Measurement was performed by a CTD controller.

<Evaluation of web handling properties>

A case where the base material layer was broken when the tape was ground was indicated as ×, and a case where the base material layer was not broken and was able to be recovered was indicated as o.

<Confirmation of separated state through IR measurement>

Whether or not the pressure-sensitive adhesive was separated from the base material layer was confirmed through IR measurement (NICOLET iS50 FT-IR, manufactured by ThermoFischer). The IR measurement was performed in-line on the treated base material layer (base material). A case where an IR spectrum specific to the pressure-sensitive adhesive was not found was indicated as o, and a case where an IR spectrum specific thereto was found was indicated as ×. A case where recovery was not able to be performed due to breakage was indicated as -.

<Yield of recovered base material>

After the process, the yield of the recovered base material was calculated based on a ratio between the recovered base material and a weight obtained by subtracting the weight of the pressure-sensitive adhesive from the weight of the pressure-sensitive adhesive tape. The weight of the pressure-sensitive adhesive was calculated based on the film thickness, and an area and a specific gravity of the pressure-sensitive adhesive tape.

$$\text{Recovered base material yield (\%)}=[\text{recovered base material/(weight of pressure-sensitive adhesive tape–weight of pressure-sensitive adhesive)}]\times100$$

[Production example 1]: Preparation of pressure-sensitive adhesive tape

As the pressure-sensitive adhesive tape, the following ones were prepared.

(1) "E-MASK" series "RP207" (acrylic pressure-sensitive adhesive tape, manufactured by Nitto Denko Corporation, thickness=59 $\mu$m, base material: PET (storage modulus at 25°C=$4\times10^9$ Pa))
(2) "REVALPHA" series "No. 3195HS" (acrylic pressure-sensitive adhesive tape, manufactured by Nitto Denko Corporation, thickness=155 $\mu$m, base material: PET (storage modulus at 25°C=$4\times10^9$ Pa))
(3) OPP packaging tape "No. 3040" (rubber-based pressure-sensitive adhesive tape, manufactured by Nitto Denko Corporation, thickness=69 $\mu$m, base material: PP (storage modulus at 25°C=$2\times10^9$ Pa))
(4) floor curing tape "No. 395N" (acrylic pressure-sensitive adhesive tape, manufactured by Nitto Denko Corporation, thickness=126 $\mu$m, base material: PE (storage modulus at 25°C=$1\times10^9$ Pa))
(5) "NITOFLON" series "No. 973UL" (silicone-based pressure-sensitive adhesive tape, manufactured by Nitto Denko Corporation, thickness=150 $\mu$m, base material: PTFE (storage modulus at 25°C=$2\times10^6$ Pa))

(6) pressure-sensitive adhesive tape for first-aid bandage "ST2371" (acrylic pressure-sensitive adhesive tape, manufactured by Nitto Denko Corporation, thickness=105 $\mu$m, base material: PVC (storage modulus at 25°C=$1\times10^6$ Pa))
(7) polyimide pressure-sensitive adhesive tape for heat-resistant insulation "No. 360" (silicone-based pressure-sensitive adhesive tape, manufactured by Nitto Denko Corporation, thickness=60 $\mu$m, base material: polyimide (PI), storage modulus of base material at 25°C=$10\times10^9$ Pa)

[Example 1]

An acrylic pressure-sensitive adhesive tape "RP207" having a width of 5 cm was transported while the separator was removed, an abrasive belt of a belt sander (BE-3210, manufactured by RYOBI) having the abrasive belt (grain size=#100, manufactured by Makita Corporation) mounted thereto was pressed against the exposed pressure-sensitive adhesive layer at a belt speed of 5.8 m/second, and the pressure-sensitive adhesive for forming the pressure-sensitive adhesive layer was separated. The separated pressure-sensitive adhesive was blown by air blowing and removed. The tension of the acrylic pressure-sensitive adhesive tape was set to 5 N or 30 N when the acrylic pressure-sensitive adhesive tape was pressed against the abrasive belt.
Table 1, Table 3 indicate the evaluation results.
The separated state was confirmed through IR measurement by determining whether or not a peak derived from the pressure-sensitive adhesive around 1150 cm$^{-1}$ disappeared in an IR spectrum.

[Example 2]

Example 2 was the same as Example 1 except that an acrylic pressure-sensitive adhesive tape "No. 3195HS" was used instead of the acrylic pressure-sensitive adhesive tape "RP207".
Table 1 indicates the evaluation result.
The separated state was confirmed through IR measurement by determining whether or not a peak derived from the pressure-sensitive adhesive around 1150 cm$^{-1}$ disappeared in an IR spectrum.

[Example 3]

Example 3 was the same as Example 1 except that a rubber-based pressure-sensitive adhesive tape "No. 3040" was used instead of the acrylic pressure-sensitive adhesive tape "RP207".
Table 1 indicates the evaluation result.
The separated state was confirmed through IR measurement by determining whether or not a peak derived from the pressure-sensitive adhesive around 1650 cm$^{-1}$ disappeared in an IR spectrum.

[Example 4]

Example 4 was the same as Example 1 except that an acrylic pressure-sensitive adhesive tape "No. 395N" was used instead of the acrylic pressure-sensitive adhesive tape "RP207".
Table 1 indicates the evaluation result.
The separated state was confirmed through IR measurement by determining whether or not a peak derived from the pressure-sensitive adhesive around 1150 cm$^{-1}$ disappeared in an IR spectrum.

[Example 5]

Example 5 was the same as Example 1 except that a silicone-based pressure-sensitive adhesive tape "No. 973UL" was used instead of the acrylic pressure-sensitive adhesive tape "RP207".
Table 1 indicates the evaluation result.
The separated state was confirmed through IR measurement by determining whether or not a peak derived from the pressure-sensitive adhesive around 1000 cm$^{-1}$ disappeared in an IR spectrum.

[Example 6]

Example 6 was the same as Example 1 except that a silicone-based pressure-sensitive adhesive tape "No. 360UL" was used instead of the acrylic pressure-sensitive adhesive tape "RP207".
Table 1 indicates the evaluation result.
The separated state was confirmed through IR measurement by determining whether or not a peak derived from the pressure-sensitive adhesive around 1000 cm$^{-1}$ disappeared in an IR spectrum.

[Example 7]

Example 7 was the same as Example 1 except that an abrasive belt (grain size=#40, manufactured by Makita Corporation) was used instead of the abrasive belt (grain size=#100, manufactured by Makita Corporation).
Table 1 indicates the evaluation result.
The separated state was confirmed through IR measurement by determining whether or not a peak derived from the pressure-sensitive adhesive around 1000 cm$^{-1}$ disappeared in an IR spectrum.

[Example 8]

Example 8 was the same as Example 1 except that an abrasive belt (grain size=#600, manufactured by Makita Corporation) was used instead of the abrasive belt (grain size=#100, manufactured by Makita Corporation).
Table 1 indicates the evaluation result.
The separated state was confirmed through IR measurement by determining whether or not a peak derived from the pressure-sensitive adhesive around 1000 cm$^{-1}$ disappeared in an IR spectrum.

[Comparative example 1]

Comparative example 1 was the same as Example 1 except that an acrylic pressure-sensitive adhesive tape "ST2371" was used instead of the acrylic pressure-sensitive adhesive tape "RP207".
Table 1 indicates the evaluation result.

[Table 1]

| | | Example 1 | Example 2 | Example 3 | Example 4 | Example 5 |
|---|---|---|---|---|---|---|
| Pressure-sensitive adhesive tape | Kind | RP207 | No. 3195HS | No. 3040 | No. 395N | No. 973UL |
| | Entire thickness ($\mu$m) | 59 | 155 | 69 | 126 | 150 |
| | Kind of pressure-sensitive adhesive layer | acrylic | acrylic | rubber-based | acrylic | silicone-based |
| | Kind of base material layer | PET | PET | PP | PE | PTFE |
| | Storage modulus (Pa) of base material layer at 25°C | $4\times10^9$ | $4\times10^9$ | $2\times10^9$ | $1\times10^9$ | $2\times10^6$ |
| Grain size of abrasive belt | | #100 | #100 | #100 | #100 | #100 |
| Web handling properties | Tension of 30 N | ○ | ○ | ○ | ○ | × |
| | Tension of 5 N | ○ | ○ | ○ | ○ | ○ |
| Confirmation of separated state through IR measurement | Tension of 30 N | ○ | ○ | ○ | ○ | - |
| | Tension of 5 N | ○ | ○ | ○ | ○ | ○ |

(continued)

| [Table 1] (cont.) | | | Example 6 | Example 7 | Example 8 | Comparative example 1 |
|---|---|---|---|---|---|---|
| Pressure-sensitive adhesive tape | | Kind | No. 360UL | RP207 | RP207 | ST2371 |
| | | Entire thickness ($\mu$m) | 60 | 59 | 59 | 105 |
| | | Kind of pressure-sensitive adhesive layer | silicone-based | acrylic | acrylic | acrylic |
| | | Kind of base material layer | polyimide | PET | PET | PVC |
| | | Storage modulus (Pa) of base material layer at 25°C | $10\times10^9$ | $4\times10^9$ | $4\times10^9$ | $1\times10^6$ |
| Grain size of abrasive belt | | | #100 | #40 | #600 | #100 |
| Web handling properties | Tension of 30 N | | ○ | × | ○ | × |
| | Tension of 5 N | | ○ | ○ | ○ | × |
| Confirmation of separated state through IR measurement | Tension of 30 N | | ○ | × | ○ | - |
| | Tension of 5 N | | ○ | ○ | ○ | - |

[Example 9]

An acrylic pressure-sensitive adhesive tape "RP207" having a width of 5 cm was transported while the separator was removed, and an electric tool (PROXXON mini router MM50/D) (hand grinder) having an abrasive cloth attachment (#100) mounted thereto was pressed against the exposed pressure-sensitive adhesive layer at 20,000 rpm, and the pressure-sensitive adhesive for forming the pressure-sensitive adhesive layer was separated. The separated pressure-sensitive adhesive was blown by air blowing and removed. The tension of the acrylic pressure-sensitive adhesive tape was set to 30 N when the acrylic pressure-sensitive adhesive tape was pressed against the electric tool.

Table 2 indicates the evaluation result.

The separated state was confirmed through IR measurement by determining whether or not a peak derived from the pressure-sensitive adhesive around 1150 cm$^{-1}$ disappeared in an IR spectrum.

[Comparative example 2]

Comparative example 2 was the same as Example 9 except that a metal brush attachment was mounted instead of the abrasive cloth attachment (#100).

Table 2 indicates the evaluation result.

The separated state was confirmed through IR measurement by determining whether or not a peak derived from the pressure-sensitive adhesive around 1150 cm$^{-1}$ disappeared in an IR spectrum.

[Table 2]

| | Example 9 | Com parative example 2 |
|---|---|---|
| Grinding attachment | Abrasive cloth | Metal brush |
| Grain size | #100 | - |

(continued)

|  |  | Example 9 | Com parative example 2 |
|---|---|---|---|
| Pressure-sensitive adhesive tape | Kind | RP207 | RP207 |
| | Entire thickness ($\mu$m) | 59 | 59 |
| | Kind of pressure-sensitive adhesive layer | acrylic | acrylic |
| | Kind of base material layer | PET | PET |
| | Storage modulus (Pa) of base material layer at 25°C | $4\times10^9$ | $4\times10^9$ |
| Confirmation of separated state through IR measurement | Tension of 30 N | ○ | ○ |
| Yield (%) | | 99 | 90 |

[Example 10]

An acrylic pressure-sensitive adhesive tape "RP207" having a width of 5 cm was transported while the separator was removed. Firstly, an abrasive belt of a belt sander (BE-3210, manufactured by RYOBI) having the abrasive belt (grain size=#100, manufactured by Makita Corporation) mounted thereto was pressed against the exposed pressure-sensitive adhesive layer at a belt speed of 5.8 m/second. Subsequently, an abrasive belt of a belt sander (BE-3210, manufactured by RYOBI) having the abrasive belt (grain size=#600, manufactured by Makita Corporation) mounted thereto was pressed against the pressure-sensitive adhesive layer at a belt speed of 5.8 m/second, and the pressure-sensitive adhesive for forming the pressure-sensitive adhesive layer was separated. The separated pressure-sensitive adhesive was blown by air blowing and removed. The tension of the acrylic pressure-sensitive adhesive tape was set to 30 N when the acrylic pressure-sensitive adhesive tape was pressed against the abrasive belt.

Table 3 indicates the evaluation result.

The separated state was confirmed through IR measurement by determining whether or not a peak derived from the pressure-sensitive adhesive around 1150 cm$^{-1}$ disappeared in an IR spectrum.

[Table 3]

|  |  | Example 1 | Example 10 |
|---|---|---|---|
| Pressure-sensitive adhesive tape | Kind | RP207 | RP207 |
| | Entire thickness ($\mu$m) | 59 | 59 |
| | Kind of pressure-sensitive adhesive layer | acrylic | acrylic |
| | Kind of base material layer | PET | PET |
| | Storage modulus (Pa) of base material layer at 25°C | $4\times10^9$ | $4\times10^9$ |
| Grain size of abrasive belt | 1 st | #100 | #100 |
| | 2nd | - | #600 |
| Web handling properties | Tension of 30 N | ○ | ○ |
| Confirmation of separated state through IR measurement | Tension of 30 N | ○ | ○ |
| Yield (%) | | 96 | 99 |

INDUSTRIAL APPLICABILITY

The pressure-sensitive adhesive tape processing method according to the embodiment of the present invention allows the base material and the pressure-sensitive adhesive for forming the pressure-sensitive adhesive tape to be easily separated from each other at low cost, and is thus suitably used for, for example, recycling pressure-sensitive adhesive tape waste produced in a large amount in production sites or the like.

DESCRIPTION OF THE REFERENCE CHARACTERS

| | |
|---|---|
| 1000 | belt sander |
| 1000a | belt sander |
| 1000b | belt sander |
| 2001 | air blow |
| 2002 | air blow |
| 2003 | air blow |
| 2004 | air blow |
| 100 | pressure-sensitive adhesive tape |
| 10 | base material layer |
| 20 | pressure-sensitive adhesive layer |
| 20a | pressure-sensitive adhesive layer |
| 20b | pressure-sensitive adhesive layer |
| 20' | pressure-sensitive adhesive layer-derived component (pressure-sensitive adhesive) |
| 20a' | pressure-sensitive adhesive layer-derived component (pressure-sensitive adhesive) |
| 20b' | pressure-sensitive adhesive layer-derived component (pressure-sensitive adhesive) |
| 30 | separator |
| 1 | roll body |
| 2 | separator winding roll |
| 3 | roll |

**Claims**

1. A pressure-sensitive adhesive tape processing method for processing a pressure-sensitive adhesive tape including a base material layer and a pressure-sensitive adhesive layer, wherein

   a storage modulus of the base material layer at 25°C is 2 MPa or more,
   the pressure-sensitive adhesive tape processing method comprising a step (I) of separating a pressure-sensitive adhesive for forming the pressure-sensitive adhesive layer, from the base material layer, by grinding a surface of the pressure-sensitive adhesive layer of the pressure-sensitive adhesive tape.

2. The pressure-sensitive adhesive tape processing method according to claim 1, wherein a tension of the pressure-sensitive adhesive tape is from 0.1 N to 1,000 N in the step (I).

3. The pressure-sensitive adhesive tape processing method according to claim 1 or 2, comprising a step (II) of removing the pressure-sensitive adhesive separated by the grinding.

4. The pressure-sensitive adhesive tape processing method according to claim 3, wherein the step (II) is at least one selected from a removal step in which air blowing is used, a removal step in which water is sprayed, and a removal step in which a brush is used.

5. The pressure-sensitive adhesive tape processing method according to any one of claims 1 to 4, comprising a plurality of the steps (I).

6. The pressure-sensitive adhesive tape processing method according to any one of claims 1 to 5, wherein

the pressure-sensitive adhesive tape is a double-sided pressure-sensitive adhesive tape having the pressure-sensitive adhesive layer on each of both surfaces of the base material layer, and
a surface of the pressure-sensitive adhesive layer on each of both the surfaces of the base material layer is ground by the grinding in the step (I).

7. The pressure-sensitive adhesive tape processing method according to any one of claims 1 to 6, wherein a thickness of the pressure-sensitive adhesive tape is from 10 $\mu$m to 600 $\mu$m.

8. The pressure-sensitive adhesive tape processing method according to any one of claims 1 to 7, wherein a thickness of the pressure-sensitive adhesive layer is from 3 $\mu$m to 300 $\mu$m.

9. The pressure-sensitive adhesive tape processing method according to any one of claims 1 to 8, wherein the pressure-sensitive adhesive layer is formed of at least one kind selected from the group consisting of an acrylic pressure-sensitive adhesive, a urethane-based pressure-sensitive adhesive, a rubber-based pressure-sensitive adhesive, and a silicone-based pressure-sensitive adhesive.

10. A pressure-sensitive adhesive tape processing device comprising:

feeding means for feeding a pressure-sensitive adhesive tape including a base material layer and a pressure-sensitive adhesive layer;
transporting means for transporting the pressure-sensitive adhesive tape;
grinding means for grinding the pressure-sensitive adhesive layer of the pressure-sensitive adhesive tape; and
recovering means for recovering the base material layer that remains after a pressure-sensitive adhesive for forming the pressure-sensitive adhesive layer is separated.

11. The pressure-sensitive adhesive tape processing device according to claim 10, wherein the grinding means is an electric tool including a file.

12. The pressure-sensitive adhesive tape processing device according to claim 10 or 11, wherein a tension of the pressure-sensitive adhesive tape is from 0.1 N to 1,000 N when the pressure-sensitive adhesive layer is ground by the grinding means.

13. The pressure-sensitive adhesive tape processing device according to any one of claims 10 to 12, comprising removal means for removing the separated pressure-sensitive adhesive for forming the pressure-sensitive adhesive layer.

14. The pressure-sensitive adhesive tape processing device according to claim 13, wherein the removal means is at least one kind selected from removal in which air blowing is used, removal in which water is sprayed, and removal in which a brush is used.

15. The pressure-sensitive adhesive tape processing device according to any one of claims 10 to 14, comprising a plurality of the grinding means.

16. The pressure-sensitive adhesive tape processing device according to any one of claims 10 to 15, wherein

the pressure-sensitive adhesive tape is a double-sided pressure-sensitive adhesive tape having the pressure-sensitive adhesive layer on each of both surfaces of the base material layer, and
a surface of the pressure-sensitive adhesive layer on each of both the surfaces of the base material layer is ground by the grinding performed by the grinding means.

FIG.1

FIG.2

FIG.3

FIG.4

FIG.5

## INTERNATIONAL SEARCH REPORT

| | International application No. |
|---|---|
| | **PCT/JP2022/013731** |

**A.    CLASSIFICATION OF SUBJECT MATTER**

*B24B 7/13*(2006.01)i; *B24B 21/12*(2006.01)i; *B29B 17/02*(2006.01)i; *C09J 7/38*(2018.01)i
FI:    B29B17/02; C09J7/38; B24B7/13; B24B21/12

According to International Patent Classification (IPC) or to both national classification and IPC

**B.    FIELDS SEARCHED**

Minimum documentation searched (classification system followed by classification symbols)

B24B7/13; B24B21/12; B29B17/02; C09J7/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2019-209511 A (NIPPON ZEON CO) 12 December 2019 (2019-12-12)<br>    claims, paragraphs [0017]-[0046], [0066]-[0095], [0099]-[0110], fig. 1-3, 7-13 | 1-16 |
| Y | | 5-6, 15-16 |
| X | JP 2020-1262 A (NIPPON ZEON CO) 09 January 2020 (2020-01-09)<br>    claims, paragraphs [0016]-[0068], [0074]-[0083], fig. 1-8 | 1-4, 6-16 |
| Y | | 5-6, 15-16 |
| X | JP 2002-120193 A (JAPAN REPRO-MACHINE INDUSTRIES CO LTD) 23 April 2002<br>(2002-04-23)<br>    claims, paragraphs [0001], [0008]-[0016], fig. 1-2 | 1-4, 7-14 |
| Y | | 5-6, 15-16 |
| A | JP 62-238710 A (JAPAN SHINKU KK) 19 October 1987 (1987-10-19)<br>    entire text | 1-16 |
| A | JP 6-114836 A (OKAMOTO IND INC) 26 April 1994 (1994-04-26)<br>    entire text | 1-16 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/013731**

**C.      DOCUMENTS CONSIDERED TO BE RELEVANT**

| Category* | Citation of document, with indication, where appropriate, of the relevant passages | Relevant to claim No. |
|---|---|---|
| A | JP 2012-171276 A (TEIJIN DUPONT FILMS JAPAN LTD) 10 September 2012 (2012-09-10) entire text | 1-16 |

Form PCT/ISA/210 (second sheet) (January 2015)

INTERNATIONAL SEARCH REPORT
Information on patent family members

International application No.

**PCT/JP2022/013731**

| Patent document cited in search report | | | Publication date (day/month/year) | Patent family member(s) | Publication date (day/month/year) |
|---|---|---|---|---|---|
| JP | 2019-209511 | A | 12 December 2019 | (Family: none) | |
| JP | 2020-1262 | A | 09 January 2020 | (Family: none) | |
| JP | 2002-120193 | A | 23 April 2002 | (Family: none) | |
| JP | 62-238710 | A | 19 October 1987 | (Family: none) | |
| JP | 6-114836 | A | 26 April 1994 | (Family: none) | |
| JP | 2012-171276 | A | 10 September 2012 | (Family: none) | |

Form PCT/ISA/210 (patent family annex) (January 2015)

**REFERENCES CITED IN THE DESCRIPTION**

**Patent documents cited in the description**

- JP 11241053 A
- JP 11323280 A
- JP 7113067 A
- JP 2002069411 A
- JP 2015074771 A
- JP 2014047280 A